# EUROPEAN PATENT APPLICATION

(11) **EP 2 464 095 A1**
(43) Date of publication of application: **13.06.2012**
(21) Application number: 10806357.9
(22) Date of filing: 27.07.2010
(51) Int. Cl.: H04N 5/225, G06T 1/00, H04N 5/232

(54) **ELECTRONIC DEVICE, CONTROL METHOD, PROGRAM, AND IMAGE CAPTURING SYSTEM**

(30) Priority: 04.08.2009 JP 2009181679
(71) Applicant: Sony Corporation, Tokyo 108-0075 (JP)
(72) Inventor: KURODA, Keiichi, Tokyo 108-0075 (JP)
(74) Representative: Beder, Jens
(86) International application number: PCT/JP2010/062561
(87) International publication number: WO 2011/016358

(57) **Abstract**

The present invention relates to, for example, an electronic apparatus, a control method, and a program that are capable of realizing an image-capturing system that is more intelligent than existing systems and useful for the user, and to the image-capturing system.

The image-capturing system includes a digital still camera 1 including an image-capturing unit that performs image capture so as to obtain a captured image, and a tripod head 10 that changes the field of view of the image-capturing unit by driving a movable mechanism. The tripod head 10 outputs a signal in accordance with the movement of the tripod head 10 from a stationary state, and the digital still camera 1 determines whether or not movement from the stationary state has occurred on the basis of the input signal, and performs predetermined control on the basis of the determination result. The present invention can be applied to an image-capturing system that is constituted by, for example, a digital still camera and a tripod head.

## Description

### Technical Field

The present invention relates to an electronic apparatus and a method of controlling the electronic apparatus. Furthermore, the present invention relates to a program to be executed by a computer of the electronic apparatus.
In addition, the present invention relates to an image-capturing system including an image-capturing device including an image-capturing unit that performs image capture so as to obtain a captured image, and a tripod head device that changes the field of view of the image-capturing unit by driving a movable mechanism.

### Background Art

PTL 1 above discloses a technology in which an image-capturing system including a digital still camera and a tripod head that changes the orientation of the pan/tilt direction of the digital still camera in an electrically-driven manner performs automatic composition adjustment and automatic recording of a captured image that is obtained in accordance with the composition adjustment.
In the technology disclosed in PTL 1, for example, by using a face detection technology, a search for a subject as a person is performed. Specifically, while the digital still camera is being rotated in a pan direction by using the tripod head, detection of a subject (face of a person) that is displayed within a screen frame is performed.
Then, as a result of such a subject search, in a case where a subject is detected within the screen frame, the rotation in the pan direction is stopped, and thereafter a judgment of what composition is best, which corresponds to the detection mode (for example, the number of subjects, the position, and the size of subjects) of subjects within the screen frame at that time point, is performed (best composition judgment). That is, pan/tilt/zoom angles, which are considered to be best, are obtained.
In addition, in response to the respective angles of pan/tilt/zoom, which are considered to be best by the best composition judgment in the manner described above, being obtained, adjustment of the respective pan/tilt/zoom angles is performed by using those angles as target angles (composition adjustment).
After such composition adjustment is completed, automatic recording of the captured image is performed.

### Citation List

### Patent Literature

PTL 1: Japanese Unexamined Patent Application Publication No. 2009-100300

### Summary of Invention

### Technical Problem

Here, the image-capturing system disclosed in PTL 1 above can be constituted by at least a digital still camera and a tripod head, and can be sufficiently decreased in size to such a degree as to be portable as regard the size of the entire system.
If such an image-capturing system is sufficiently small as described above, a use method in which a user freely moves the arrangement position of the image-capturing system can be adopted.

However, in the related art, a situation in which the setting position of the image-capturing system in the middle of operation is moved is not assumed. Only a use method is permitted in which after the image-capturing system is arranged at a certain position, an automatic image-capturing operation is continued at that position until an image-capturing stop instruction is issued.

Here, because the movement of the image-capturing system during operation is not assumed to be that described above, it can be considered that functions that can be provided in the image-capturing system are narrowed. In that sense, it can be considered that the usefulness of the system is decreased.

The present invention aims to realize an image-capturing system, which is more intelligent than existing systems and is more useful for a user, the image-capturing system performing appropriate corresponding operations in a case where an arrangement position of the image capturing system that performs automatic image-capturing operations such as those described above is moved during operation by a user (in a case where it is estimated that the image-capturing system is placed in a new situation).

### Solution to Problem

In order to solve the problems, the present invention is configured as an electronic apparatus in the following manner.
That is, the present invention includes a control unit that determines whether or not the mobile apparatus has moved from a stationary state on the basis of a signal input from a stationary/movement detection unit that outputs a signal in accordance with movement from the stationary state, and that performs predetermined control on the basis of the determination result.

According to the present invention, on the basis of a determination result of whether or not movement from the stationary state has occurred, that is, on the basis of a determination result of whether or not the apparatus is estimated to be placed in a new situation, a corresponding predetermined operation can be performed.

### Advantageous Effects of Invention

According to the present invention, an appropriate corresponding operation can be performed in correspondence with a case in which the apparatus is placed in a new situation. That is, at this point, it is possible to realize an image-capturing system that is more intelligent than existing systems and more useful for a user.

### Brief Description of Drawings

[Fig. 1] Fig. 1 includes a front view and a back view briefly illustrating the exterior of a digital still camera, which is a component of a portable electronic apparatus (image-capturing system) as an embodiment.
[Fig. 2] Fig. 2 is a perspective view illustrating an exterior example of a tripod head, which is a component of a portable electronic apparatus (image-capturing system) as an embodiment.
[Fig. 3] Fig. 3 is a front view illustrating a mode example of a portable electronic apparatus (image-capturing system) as an embodiment, which is formed in such a manner that a digital still camera is mounted in a tripod head.
[Fig. 4] Fig. 4 is a plan view illustrating a mode example of a portable electronic apparatus (image-capturing system) as an embodiment, which is formed in such a manner that a digital still camera is mounted in a tripod head, together with a mode example of movement in the pan direction.
[Fig. 5] Fig. 5 includes side views illustrating a mode example of a portable electronic apparatus (image-capturing system) as an embodiment, which is formed in such a manner that a digital still camera is mounted in a tripod head, together with a mode example of movement in a tilt direction.
[Fig. 6] Fig. 6 is a block diagram illustrating an internal configuration example of a digital still camera of a first embodiment.
[Fig. 7] Fig. 7 is a block diagram illustrating an internal configuration example of a tripod head.
[Fig. 8] Fig. 8 illustrates a configuration example of a stationary/lift-up detection unit.
[Fig. 9] Fig. 9 illustrates function operations that are realized by a signal processing unit, the function operations being converted into blocks.
[Fig. 10] Fig. 10 is a flowchart illustrating a flow of an automatic image-capturing operation in accordance with automatic composition adjustment.
[Fig. 11] Fig. 11 is a schematic illustration of operations as the first embodiment.
[Fig. 12] Fig. 12 is a flowchart illustrating a specific processing procedure for realizing operations as the first embodiment.
[Fig. 13] Fig. 13 illustrates that the origin of a pan angle is reset in accordance with a zero-resetting process of a pulse count value regarding a rotary encoder.
[Fig. 14] Fig. 14 is a flowchart illustrating a specific processing procedure in a case where a pan angle origin resetting process is performed at a timing at which the portable electronic apparatus is made to be stationary again as an operation of a second embodiment.
[Fig. 15] Fig. 15 is a flowchart illustrating a specific processing procedure in a case where a pan angle origin resetting process is performed at a timing at which movement from a stationary state occurs as an operation of the second embodiment.
[Fig. 16] Fig. 16 is a block diagram illustrating an internal configuration example of a digital still camera of a third embodiment.
[Fig. 17] Fig. 17 is a schematic illustration of operations as the third embodiment.
[Fig. 18] Fig. 18 is a flowchart illustrating a specific processing procedure for realizing operations as the third embodiment.
[Fig. 19] Fig. 19 illustrates function operations that are realized by a signal processing unit, the function operations being converted into blocks.
[Fig. 20] Fig. 20 is a flowchart illustrating a specific processing procedure for realizing operations as a fourth embodiment.
[Fig. 21] Fig. 21 is a flowchart illustrating a specific processing procedure for realizing operations as a fifth embodiment.

### Description of Embodiments

Modes for carrying out the present invention (hereinafter referred to as embodiments) will be described in the following order.
<1. Configuration of Image-Capturing System>
   [1-1. Entire system configuration]
   [1-2. Digital still camera]
   [1-3. Tripod head]
   [1-4. Automatic image-capturing operation in accordance with automatic composition adjustment]
<2. First Embodiment (subject search is performed in accordance with movement)>
   [2-1. Specific operation example]
   [2-2. Processing procedure]
<3. Second Embodiment (origin resetting of pan angle is performed in accordance with movement)>
   [3-1. Specific operation example]
   [3-2. Processing procedure]
<4. Third Embodiment (control of subject search start range in accordance with vertical movement direction)>
   [4-1. System configuration and specific operation example]
   [4-2. Processing procedure]
<5. Fourth Embodiment (zoom angle control in accordance with amount of movement)>
   [5-1. Specific operation example]
   [5-2. Processing procedure]
<6. Fifth Embodiment (image-capturing mode setting control in accordance with movement destination situation>
   [6-1. Specific operation example]
   [6-2. Processing procedure]
<7. Modification>

Meanwhile, in the following description, terms "screen frame", "angle of view", "image-capturing field of view", "image-capturing field of view selection angle", and "composition" are used, and the definition of each term is as follows.
The term "screen frame" refers to, for example, an area range corresponding to one screen in which an image is seen as being embedded, and in general, has a frame shape as a longitudinally or laterally long rectangle.
The term "angle of view" is also called a zoom angle, in which a range in where an image is contained in a screen frame determined by the position of a zoom lens in the image-capturing optical system is given using an angle. Strictly speaking, the angle of view is determined by the focal length of the image-capturing optical system and the size of the image plane (image sensor, film). Here, the image plane size is fixed, and the element that changes in such a manner as to correspond to the focal length is referred to as an angle of view. In the following, in some cases, the value of the angle of view is represented by a focal length (for example, in 35 mm conversion).
The term "image-capturing field of view" represents a field of view of an image-capturing optical system, and corresponds to a range that is cut out by the screen frame.
The term "image-capturing field of view selection angle" represents an element that determines which portion is cut out from a scene in the surroundings of an image-capturing device. Here, the image-capturing field of view selection angle refers to an angle which is determined on the basis of an assigning angle in the pan (horizontal) direction and an assigning angle (elevation angle, depression angle) in the tilt (vertical) direction in addition to the above-mentioned angle of view.
The term "composition" is also called framing, and refers to a composition which is determined by the setting of the image-capturing field of view selection angle, that is, the setting of the pan/tilt angle and the angle of view (zoom) in this case.

Here, in the present embodiment, a case is used as an example, in which a portable electronic apparatus of the present invention is configured as an image-capturing system including a digital still camera and a tripod head that removably holds the digital still camera.

### <1. Configuration of Image-Capturing System>

### [1-1. Entire system configuration]

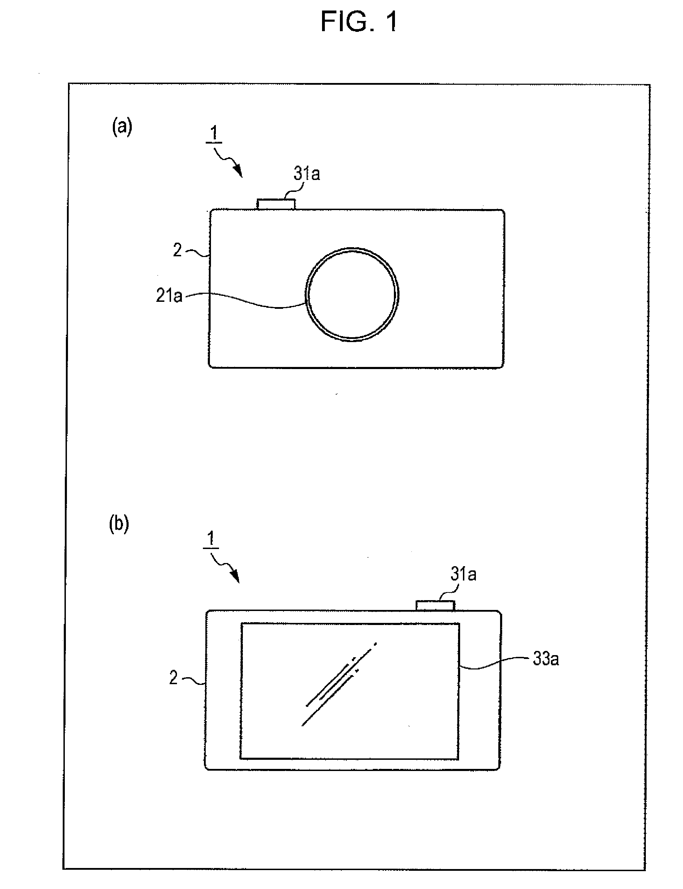

An image-capturing system of the embodiment is formed to include a digital still camera 1 and a tripod head 10 to which the digital still camera 1 can be removably mounted.
First, Fig. 1 illustrates an exterior example of the digital still camera 1. Part (a) of Fig. 1 and part (b) of Fig. 1 are a front view and a back view of the digital still camera 1, respectively.
First, as shown in part (a) of Fig. 1, the digital still camera 1 shown in this figure includes a lens unit 21a on the front side of a main unit 2. The lens unit 21a is a part that appears, as an optical system for the purpose of image capture, on the outer side of the main unit 2.

Furthermore, on the top surface part of the main unit 2, a release button 31a is provided. In an image-capturing mode, an image (captured image) that is captured by the lens unit 21a is generated as an image signal. Then, when an operation with respect to the release button 31a in the image-capturing mode is performed, a captured image at that timing is recorded as the image data of a still image on a recording medium. That is, photograph taking is performed.

Furthermore, as shown in part (b) of Fig. 1, the digital still camera 1 has a display screen unit 33a on the rear surface side thereof.
On the display screen unit 33a, during the image-capturing mode, an image that is being captured by the lens unit 21a, the image being called a through image, is displayed. Furthermore, during the reproduction mode, image data that is recorded on a recording medium is reproduced and displayed. In addition, an operation image as a GUI (Graphical User Interface) is displayed in accordance with an operation performed on the digital still camera 1 by a user.

Meanwhile, the digital still camera 1 of the present embodiment is assumed that a touch panel is combined with the display screen unit 33a. As a result, it is possible for the user to perform a proper operation by putting a finger on the display screen unit 33a.

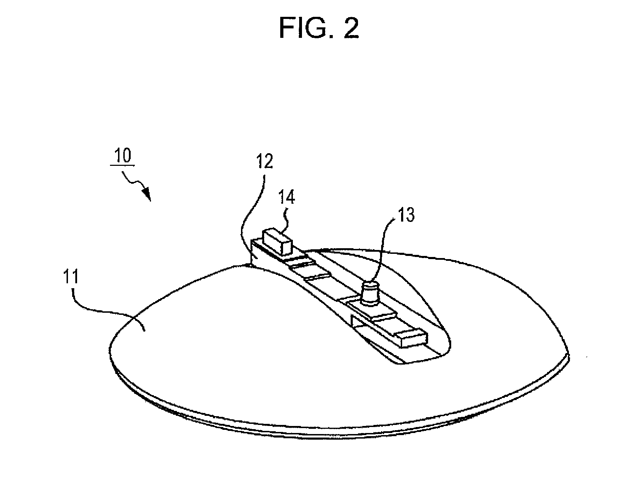

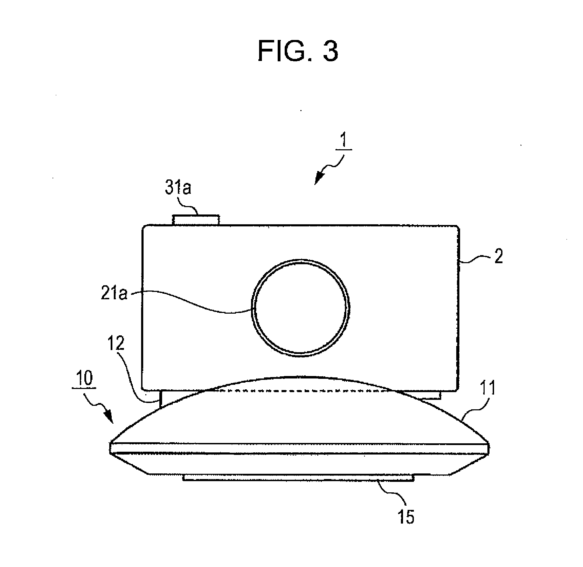

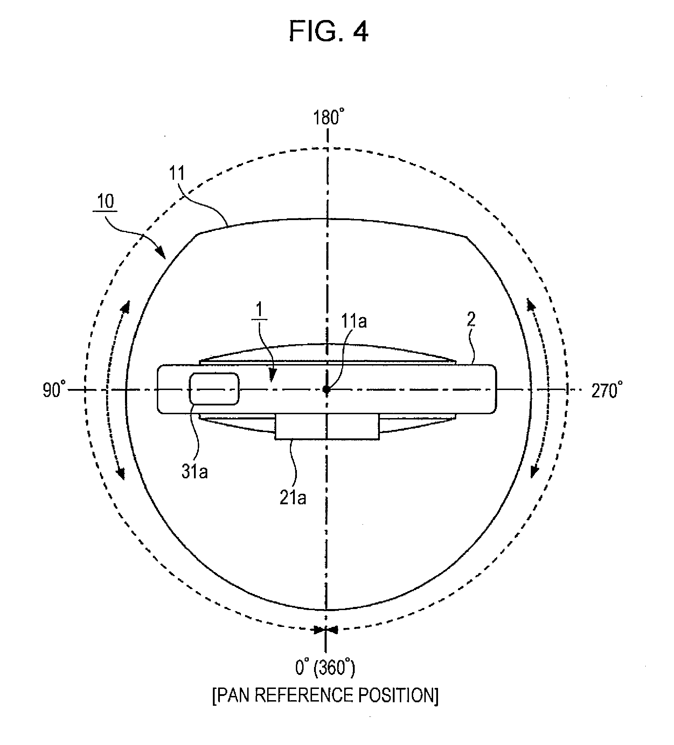

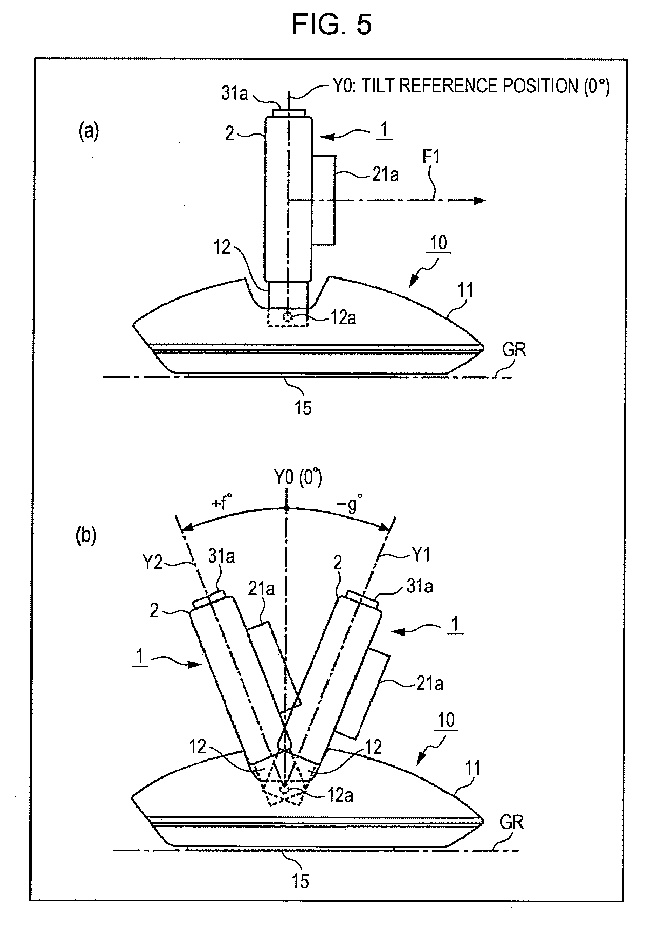

Fig. 2 is a perspective view illustrating the exterior of a tripod head 10. Furthermore, Figs. 3 to 5 illustrate, as exteriors of the automatic image-capturing system of the present embodiment, states in which the digital still camera 1 is placed in an appropriate state on the tripod head 10. Fig. 3 is a front view. Fig. 4 is a plan view. Fig. 5 is a side view (in particular, part (b) of Fig. 5 illustrates, in a side view, the movable range of a tilt mechanism).

As shown in Figs. 2, 3, 4 and 5, the tripod head 10 has a configuration in which, broadly, a main unit 11 is combined on a grounding seat part 15, and furthermore, a camera seat part 12 is mounted in the main unit 11.

When the digital still camera 1 is to be mounted in the tripod head 10, the bottom surface side of the digital still camera 1 is placed on the top surface side of the camera seat part 12. As shown in Fig. 2, a projecting part 13 and a connector 14 are provided on the top surface part of the camera seat part 12. Although the illustration is omitted, a hole part that engages with the projecting part 13 is formed on the bottom surface part of the main unit 2 of the digital still camera 1. In a state in which the digital still camera 1 is appropriately placed on the camera seat part 12, the hole part and the projecting part 13 are engaged with each other. In this state, in the case where a usual panning/tilting operation of the tripod head 10 is performed, the digital still camera 1 will not be displaced or drop off the tripod head 10.

Furthermore, in the digital still camera 1, a connector is also provided at a predetermined position of the bottom surface part thereof. In a state in which the digital still camera 1 is appropriately mounted in the camera seat part 12 in the manner described above, the connector of the digital still camera 1 and the connector 14 of the tripod head 10 are connected with each other, and thus, at least mutual communication becomes possible.

Meanwhile, for example, in practice, the positions of the connector 14 and the projecting part 13 can be changed (moved) within a certain range in the camera seat part 12. Moreover, by using together, for example, an adapter that fits with the shape of the bottom surface part of the digital still camera 1, a different type of digital still camera can be mounted in the camera seat part 12 in a state of capable of communicating with the tripod head 10.
Furthermore, communication between the digital still camera 1 and the camera seat part 12 may be performed in a wireless manner.

Furthermore, in a state in which, for example, the digital still camera 1 is placed on the tripod head 10, the construction may be formed in such a way that charging can be performed from the tripod head 10 to the digital still camera 1. In addition, the construction may also be considered such that a video signal of an image or the like, which is being reproduced by the digital still camera 1, is also transmitted to the tripod head 10 side, and is further output from the tripod head 10 to an external monitor device through a cable, wireless communication, or the like. That is, the tripod head 10 is not used only to simply change the image-capturing field of view selection angle of the digital still camera 1, but rather can be given a function as a so-called cradle.

Next, a description will be given of a basic movement of the digital still camera 1 in a pan/tilt direction by using the tripod head 10.
First, the basic movement in the pan direction becomes as follows.
In a state in which the tripod head 10 is placed, for example, on a table or on a floor surface, the bottom surface of the grounding seat part 15 is grounded. In this state, as shown in Fig. 4, the main unit 11 side can be rotated in the clockwise direction and in the counterclockwise direction with a rotational axis 11a serving as a rotational center. That is, as a result, it is possible to change the image-capturing field of view selection angle in the horizontal direction (right and left direction) of the digital still camera 1 that is mounted on the tripod head 10 (so-called panning).
Meanwhile, the pan mechanism of the tripod head 10 in this case has a configuration in which rotation of 360° or more can be freely performed without limitation with regard to either the clockwise direction or the counterclockwise direction.

Furthermore, in the pan mechanism of the tripod head 10, a reference position in the pan direction has been determined.
Here, as shown in Fig. 4, after the pan reference position is set at 0° (360°), the rotational position of the main unit 11 along the pan direction, that is, the pan position (pan angle), is represented by 0° to 360°.

Furthermore, the basic movement of the tripod head 10 in the tilt direction becomes as follows. The movement in the tilt direction can be obtained as a result of the camera seat part 12 assigning an angle in both the directions of the elevation angle and the depression angle with the rotational axis 12a being the rotational center as shown in parts (a) and (b) of Fig. 5. Here, part (a) of Fig. 5 illustrates a state in which the camera seat part 12 is at a tilt reference position Y0 (0°). In this state, an image-capturing direction F1 that coincides with the image-capturing optical axis of the lens unit 21a (optical system unit) becomes parallel to a grounding surface GR on which the ground seat part 15 is grounded. Moreover, as shown in part (b) of Fig. 5, first, in the elevation angle direction, the camera seat part 12 can move in the range from the tilt reference position Y0 (0°) to a predetermined maximum rotational angle +f° with the rotational axis 12a being a rotational center. Furthermore, also, in the depression angle direction, the camera seat part 12 can move in the range from the tilt reference position Y0 (0°) to a predetermined maximum rotational angle -g° with the rotational axis 12a being a rotational center. In the manner described above, the movement of the camera seat part 12 in the range of the maximum rotational angle +f° to the maximum rotational angle -g° with the tilt reference position Y0 (0°) being a base point makes it possible to change the image-capturing field of view selection angle in the tilt direction (up and down direction) of the digital still camera 1 mounted on the tripod head 10 (camera seat part 12). That is, the operation of tilting can be obtained.

### [1-2. Digital still camera]

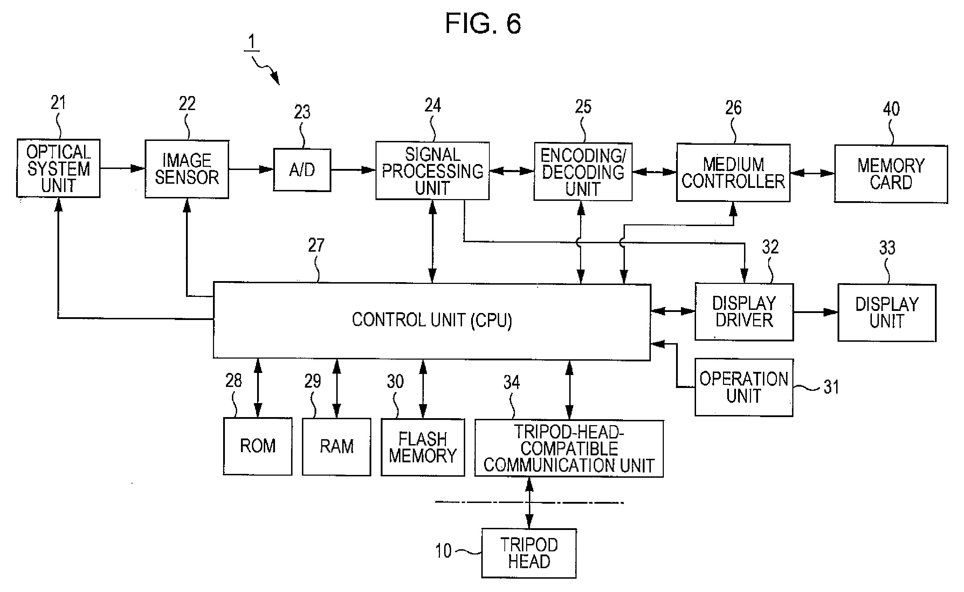

Fig. 6 is a block diagram illustrating a practical internal configuration example of the digital still camera 1.
In Fig. 6, first, an optical system unit 21 is constituted by including a predetermined number of lenses for image capture, including, for example, a zoom lens and a focus lens, and an aperture, and causes light that enters as image-capturing light to be formed as an image on the light-receiving surface of an image sensor 22.
Furthermore, the optical system unit 21 also includes a driving mechanism unit for driving the zoom lens, the focus lens, the aperture, and the like described above. The operations of these driving mechanism units are controlled under so-called camera control, such as, for example, zoom (angle of view) control, automatic focus adjustment control, and automatic exposure control, which are performed by the control unit 27.

The image sensor 22 performs so-called photoelectric conversion of converting image-capturing light obtained by the optical system unit 21 into an electrical signal. For this reason, the image sensor 22 receives the image-capturing light from the optical system unit 21 on the light-receiving surface of the photoelectric conversion element, and sequentially outputs signal electric charge that is stored in accordance with the strength of the received light at a predetermined timing. As a result, an electrical signal (image-capturing signal) corresponding to the image-capturing light is output.
Meanwhile, photoelectric conversion elements (image-capturing elements) that are adopted as the image sensor 22 are not particularly limited. In the present circumstances, examples thereof include a CMOS (Complementary Metal Oxide Semiconductor) sensor and a CCD (Charge Coupled Device). Furthermore, in a case where a CMOS sensor is to be adopted, a device (part) corresponding to the image sensor 22 can be made to be a configuration including an analog-to-digital converter corresponding to an A/D converter 23.

An image-capturing signal output from the image sensor 22 is input to the A/D converter 23, whereby the image-capturing signal is converted into a digital signal, and is input to a signal processing unit 24.

The signal processing unit 24 is constituted by a DSP (Digital Signal Processor), and performs predetermined signal processing in accordance with a program on a digital image-capturing signal output from the A/D converter 23.
For example, the signal processing unit 24 performs acquisition of the digital image-capturing signal that is output from the A/D converter 23 in units corresponding to one still image (frame image), and performs predetermined signal processing on an image-capturing signal in units of still images, which are acquired in the manner described above, thereby generating captured image data (image-captured still image data), which is image signal data corresponding to one still image.

Furthermore, in the case of the present embodiment, the signal processing unit 24 is configured to be able to perform image processing as a subject detection process, as will be described later, by using the captured image data that has been obtained in this manner. This point will be described later again.

Here, in a case where the captured image data that is generated by the signal processing unit 24 in the manner described above is to be recorded as image information in a memory card 40, which is a recording medium, captured image data corresponding to, for example, one still image is output from the signal processing unit 24 to the encoding/decoding unit 25.
The encoding/decoding unit 25 performs compression coding in accordance with a predetermined still image compression coding method on captured image data in units of still images that are output from the signal processing unit 24, thereafter attaches, for example, a header in accordance with the control of the control unit 27, and converts the image data into a format of image data that is compressed at a predetermined format. Then, the image data that is generated in this manner is transferred to a medium controller 26. The medium controller 26, under the control of the control unit 27, writes the transferred image data into a memory card 40, whereby the image data is recorded. The memory card 40 in this case is a recording medium having, for example, an outer shape of a card format in accordance with a predetermined standard, and including a non-volatile semiconductor storage element, such as a flash memory in the inside. Meanwhile, the recording medium that records image data may be of a type or at a format other than those of the memory card.

Furthermore, the digital still camera 1 causes the display unit 33 to perform image display by using captured image data that is obtained by the signal processing unit 24, making it possible to display a so-called through image, which is an image that is being captured. For example, in the signal processing unit 24, as described earlier, an image-captured signal that is output from the A/D converter 23 is acquired, and captured image data corresponding to one still image is generated. By continuing this operation, captured image data corresponding to frame images in a moving image is sequentially generated. Then, the captured image data that is generated sequentially in this manner is transferred to the display driver 32 under the control of the control unit 27. As a result, display of a through image is performed.

The display driver 32 generates a driving signal for driving the display unit 33 on the basis of the captured image data that is input from the signal processing unit 24 in the manner described above, and outputs the captured image data to the display unit 33. As a result, on the display unit 33, images based on captured image data in units of still images are sequentially displayed. When this is viewed from the user, images that are being captured at that time are displayed on the display unit 33 in a moving image manner. That is, a through image is displayed.

Furthermore, the digital still camera 1 is made to be able to reproduce the image data recorded in the memory card 40 and cause the display unit 33 to display the image.
For this purpose, the control unit 27 specifies image data and instructs the medium controller 26 to read data from the memory card 40. In response to this instruction, the medium controller 26 accesses the address on the memory card 40 on which the specified image data has been recorded, performs reading of data, and transfers the read data to the encoding/decoding unit 25.

For example, under the control of the control unit 27, the encoding/decoding unit 25 extracts entity data as compressed still image data from the captured image data that has been transferred from the medium controller 26, and performs a decoding process for compression coding with regard to this compressed still image data, and obtains captured image data corresponding to one still image. Then, the captured image data is transferred to the display driver 32. As a result, on the display unit 33, images of the captured image data recorded in the memory card 40 are reproduced and displayed.

Furthermore, it is possible to cause the display unit 33 to also display a user interface image (operation image) together with the through image, reproduction image of image data, and the like. In this case, for example, display image data as a user interface image that is required by the control unit 27 is generated in accordance with, for example, the operating state at that time, and the display image data is output to the display driver 32. As a result, the user interface image is displayed on the display unit 33. Meanwhile, the user interface image can be displayed on the display screen of the display unit 33 separately from a monitor image or the reproduction image of the captured image data like, for example, a specific menu screen, and can also be displayed in such a manner as to be superimposed and combined in a portion of the monitor image and the reproduction image of the captured image data.

The control unit 27 is formed by including a CPU (Central Processing Unit), and forms a microcomputer together with a ROM 28 and a RAM 29. The ROM 28 has stored therein, for example, in addition to programs to be executed by the CPU as the control unit 27, various setting information associated with the operations of the digital still camera 1. The RAM 29 is formed as a main storage device for the CPU.
Furthermore, a flash memory 30 in this case is provided as a non-volatile storage area used to store various setting information that needs to be changed (rewritten) in accordance with, for example, user operation, an operation history, and the like. Meanwhile, in a case where a non-volatile memory including, for example, a flash memory is to be adopted for the ROM 28, a partial storage area in the ROM 28 may be used in place of the flash memory 30.

Here, in the case of the present embodiment, the control unit 27 performs control and processing so as to realize a subject search of causing the signal processing unit 24 to perform subject detection while changing the image-capturing field of view so as to search for a subject in the surroundings of the digital still camera 1; best composition judgment of judging for, in accordance with a predetermined algorithm, the composition that is deemed to be best, which corresponds to the mode of the subject that is detected as a consequence of the subject search; composition adjustment of making the composition that is deemed to be best, which is determined by the best composition judgment, to be a target composition; and automatic recording of a captured image after the composition adjustment. This will be described later.

For the operation unit 31, various operation elements included in the digital still camera 1, and an operation information signal output part that generates an operation information signal corresponding to an operation performed on these operation elements and outputs the operation information signal to the control unit 27 are collectively shown. The control unit 27 performs a predetermined process in response to the operation information signal input from the operation unit 31. As a result, the operation of the digital still camera 1, which corresponds to the user operation, is performed.

A tripod-head-compatible communication unit 34 is a part that performs communication in accordance with a predetermined communication scheme between the tripod head 10 side and the digital still camera 1 side, and is formed by including a physical layer configuration that enables transmission and reception of a communication signal to and from the communication unit of the tripod head 10 side, and a configuration that realizes a communication process corresponding to a predetermined layer at an order higher than the physical layer configuration in a state in which, for example, the digital still camera 1 is mounted in the tripod head 10. The physical layer configuration includes a part of a connector that is connected to the connector 14 in the correspondence with Fig. 2.

### [1-3. Tripod head]

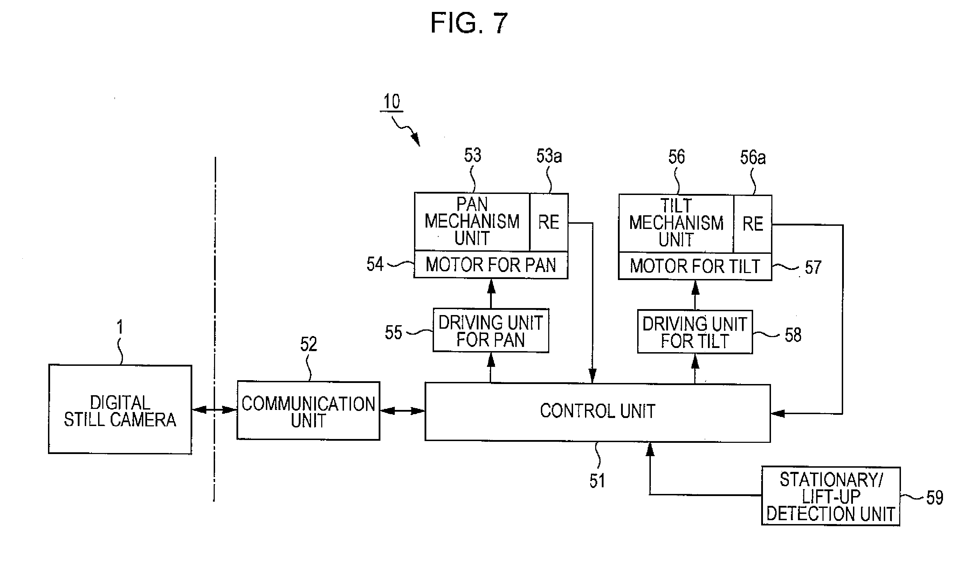

The block diagram of Fig. 7 illustrates an internal configuration example of the tripod head 10.
As described earlier, the tripod head 10 includes a pan/tilt mechanism, and includes, as parts corresponding to this, a pan mechanism unit 53, a motor 54 for pan, a tilt mechanism unit 56, and a motor 57 for tilt in the figure.
The pan mechanism unit 53 is configured by including a mechanism for giving movement in the pan (horizontal/right and left) direction, which is shown in Fig. 4, to the digital still camera 1 mounted in the tripod head 10, and the movement of the mechanism is obtained as a result of the motor 54 for pan being rotated in the reciprocal direction. Similarly, the tilt mechanism unit 56 is configured by including a mechanism for giving movement in the tilt (vertical/up and down) direction, which is shown in Fig. 5, to the digital still camera 1 mounted in the tripod head 10, and the movement of the mechanism is obtained as a result of the motor 57 for tilt being rotated in the reciprocal direction.

The control unit 51 is formed by including a microcomputer in which, for example, a CPU, a ROM, a RAM, and the like are combined and formed, and controls the movement of the pan mechanism unit 53 and the tilt mechanism unit 56. For example, when the control unit 51 controls the movement of the pan mechanism unit 53, the control unit 51 outputs a signal indicating a direction in which the pan mechanism unit 5 should be moved and a movement speed to the driving unit 55 for pan. The driving unit 55 for pan generates a motor driving signal corresponding to the input signal and outputs the motor driving signal to the motor 54 for pan. If the motor is, for example, a stepping motor, the motor driving signal becomes a pulse signal corresponding to PWM control.
In accordance with the motor driving signal, the motor 54 for pan is rotated, for example, in a necessary rotational direction and at a rotational speed, with the result that the pan mechanism unit 53 is driven so as to move in a movement direction and at a movement speed, which correspond to the rotation.
Similarly, when the movement of the tilt mechanism unit 56 is to be controlled, the control unit 51 outputs a signal indicating a movement direction and a movement speed, which is necessary for the tilt mechanism unit 56, to the driving unit 58 for tilt. The driving unit 58 for tilt generates a motor driving signal corresponding to the input signal, and outputs the motor driving signal to the motor 57 for tilt. The motor 57 for tilt is rotated, for example, in a necessary rotational direction and at a rotational speed in accordance with the motor driving signal, with the result that the tilt mechanism unit 56 is also driven so as to move in a movement direction and at a speed, which correspond to the rotation.

Here, the pan mechanism unit 53 includes a rotary encoder (rotation detection unit) 53a. The rotary encoder 53a outputs, in response to the movement of the rotation of the pan mechanism unit 53, a detection signal indicating the rotational angle amount to the control unit 51. Similarly, the tilt mechanism unit 56 includes a rotary encoder 56a. The rotary encoder 56a also outputs, in response to the movement of the rotation of the tilt mechanism unit 56, a signal indicating the rotational angle amount to the control unit 51.
As a result, the control unit 51 can obtain (monitor) in real time the information on the amount of the rotational angles of the pan mechanism unit 53 and the tilt mechanism unit 56 that are being driven.

A communication unit 52 is a part that performs communication in accordance with a predetermined communication scheme with the tripod-head-compatible communication unit 34 inside the digital still camera 1 mounted in the tripod head 10, and is formed by including, similarly to the tripod-head-compatible communication unit 34, a physical layer configuration that enables transmission and reception of a communication signal to and from a communication unit on the other party side, and a configuration that realizes a communication process corresponding to a predetermined layer at an order higher than the physical layer configuration. The physical layer configuration includes the connector 14 of the camera seat part 12 in the correspondence with Fig. 2.

Furthermore, in the case of the present embodiment, the tripod head 10 includes a stationary/lift-up detection unit 59.
The stationary/lift-up detection unit 59 is formed in such a manner that the output signal thereof changes between a case in which an image-capturing system (portable electronic apparatus) having the digital still camera 1 mounted in the tripod head 10 is in a stationary state (grounded and immovable state) and a case in which the image-capturing system is lifted up (that is, moved). That is, as a result, it is possible to detect whether the image-capturing system is in a stationary state or in a moving state.

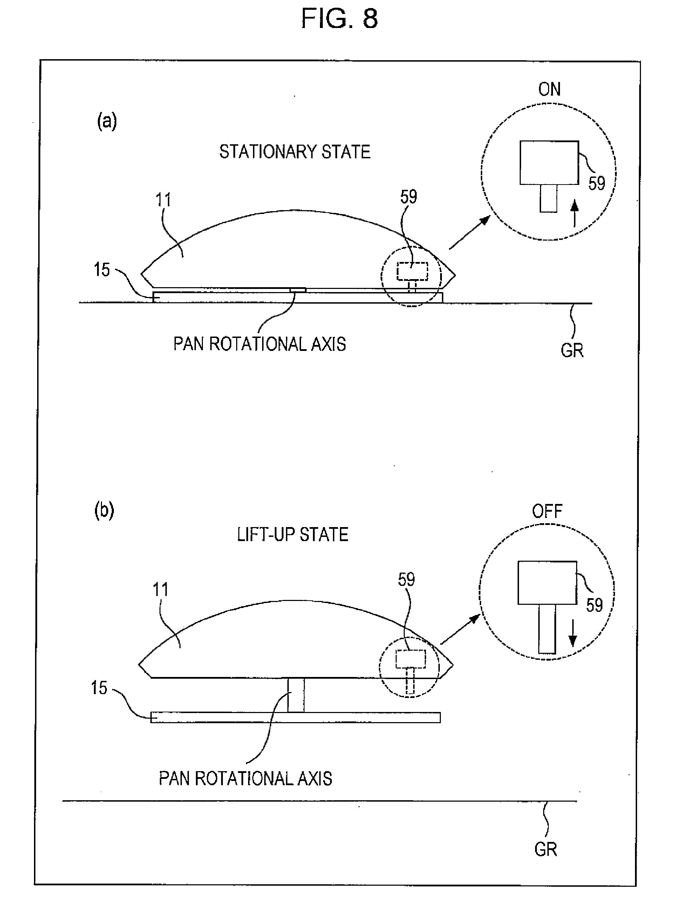

Fig. 8 illustrates a specific configuration example of the stationary/lift-up detection unit 59 provided in the tripod head 10. Part (a) of Fig. 8 schematically shows the state of the stationary/lift-up detection unit 59 when it is in a stationary state. Part (b) of Fig. 8 schematically shows the state of the stationary/lift-up detection unit 59 when it is in a lift-up state.

As shown in Fig. 8, the stationary/lift-up detection unit 59 in the case of the present example is configured to include a mechanical switch that is turned on in response to the stationary state shown in part (a) of Fig. 8 and that is turned off in response to the lift-up state shown in part (b) of Fig. 8.
Specifically, the tripod head 10 in this case is configured in such a manner that when the tripod head 10 changes from the stationary state to the lift-up state, the grounding seat part 15 that is connected to the main unit 11 through a pan rotational axis moves down due to the self-weight of the grounding seat part 15 (moves away from the main unit 11) (transition of part (a) of Fig. 8 to part (b) of Fig. 8).
Moreover, the stationary/lift-up detection unit 59 is provided on the main unit 11 side, and also, the mechanical switch thereof is configured to be turned on/off in response to push-up/push-down of a rod-like body. Specifically, in the stationary state (the clearance distance between the main unit 11 and the grounding seat part 15 is small) shown in part (a) of Fig. 8, the rod-like body is pushed up by the grounding seat part 15, and the mechanical switch is turned on. On the other hand, in the lift-up state shown in part (b) of Fig. 8, in response to the clearance distance between the main unit 11 (stationary/lift-up detection unit 59) and the grounding seat part 15 becoming large, the pushed-up state by the grounding seat part 15 with respect to the rod-like body is released, and the rod-like body is placed in a state of being pushed down in the downward direction by at least the self-weight thereof, thereby causing the mechanical switch to be turned off.
Here, in order for the mechanical switch to be reliably placed in an OFF state in response to the lift-up state, preferably, the rod-like body is urged in the downward direction by an elastic body, such as a spring.

Meanwhile, the specific configuration for detecting the stationary/lift-up of the image-capturing system by using a mechanical switch should not be limited to that shown in Fig. 8, and of course, another configuration can be adopted.
For example, in Fig. 8, a configuration in which a mechanical switch that is turned on/off in response to the push-up/push-down of the rod-like body is shown as an example. Alternatively, it is also possible to adopt a mechanical switch that is turned on/off in response to the contact/non-contact with the grounding seat part 15.

In the manner as shown in Fig. 7, the detection signal by the stationary/lift-up detection unit 59 is supplied to the control unit 51.

### [1-4. Automatic image-capturing operation in accordance with automatic composition adjustment]

Here, the image-capturing system of the present embodiment performs automatic composition adjustment operation in which a composition that is considered to be best, which is determined in accordance with the mode of a subject that is detected in consequence of the subject search, is set as a target composition by performing each operation of a subject search, best composition judgment, and composition adjustment described earlier.
A description will be given below of specific content of automatic image-capturing operation involving such an automatic composition adjustment operation.

First, when automatic composition adjustment such as that described above is to be performed, a subject detection result by the signal processing unit 24, shown in Fig. 6, is used.
The signal processing unit 24 performs the following processing as subject detection processing.
That is, the signal processing unit 24 detects an image portion corresponding to a face of a person from image signal data corresponding to one still image, which is obtained in a manner described earlier. Specifically, in the subject detection process in the case of the present example, by using a so-called face detection technology, a face frame is set in such a manner as to correspond to the area of the image portion of a face for each subject detected from within the image. Moreover, information on the number of subjects within the screen frame, the size of each of the subjects, and the positions in the respective screen frames is obtained on the basis of the information on the number, the size, and the position, etc. of the face frames.
Meanwhile, several face detection techniques are known. In the present embodiment, as to which detection technique is to be adopted should not be particularly limited. It is sufficient that an appropriate method be adopted as appropriate by considering detection accuracy, a degree of design difficulty, and the like.
Furthermore, the signal processing unit 24 performs the subject detection process such as that described above every certain prespecified number of frames, such as for each item of image signal data (that is, for each frame) corresponding to one still image.

Here, as described earlier, the signal processing unit 24 in the case of the present example is constituted by a DSP, and the subject detection process such as that described above is realized by programming for the signal processing unit 24 as the DSP.

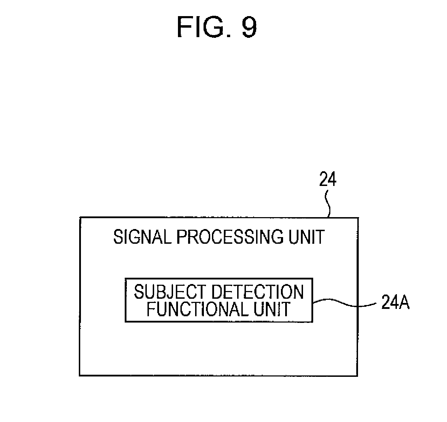

Fig. 9 illustrates function operations that are realized by programming for the signal processing unit 24 such as that described above, the function operations being converted into blocks. As shown in Fig. 9, the signal processing unit 24 in this case can be represented as having a subject detection function unit 24A that performs operation as the subject detection process described above.

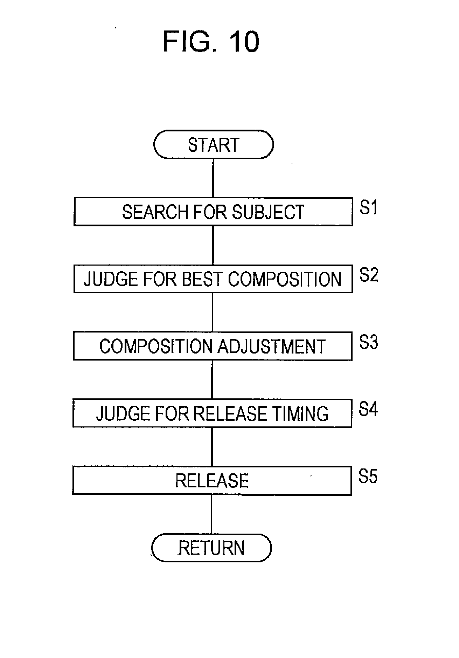

Fig. 10 is a flowchart illustrating an overall flow of an automatic image-capturing operation in accordance with automatic composition adjustment that is performed by using the result of the subject detection process such as that described above.
When performing automatic composition adjustment, by using detection information by the subject detection process such as that described above, first, a search is made for a subject that exists in the surroundings of the digital still camera 1 (step S1 in the figure).
Specifically, the subject search is performed in such a manner that the control unit 27 in the digital still camera 1 performs pan/tilt control of the tripod head 10 and zoom control of the optical system unit 21, thereby causing subject detection by the signal processing unit 24 to be performed while changing the image-capturing field of view selection angle.
Such a subject search process is completed in response to a state being obtained in which a subject is detected within a screen frame by the subject detection process of the signal processing unit 24.

After the subject search process is completed, the control unit 27 performs a best composition judgment process (S2). Specifically, a judgment as to image structure (in this case, a judgment as to the number of subjects, the subject size, the subject position, and the like within the screen frame), which is based on the subject detection result by the signal processing unit 24, is performed. Thereafter, a judgment is made as to a composition that is considered to be best in accordance with a predetermined algorithm on the basis of the information on the image structure determined by the image structure judgment. Here, as can be understood from the earlier description, the composition in this case is determined using each image-capturing field of view selection angle of pan/tilt/zoom. Therefore, depending on the best composition judgment process, as the judgment result thereof, the information on each image-capturing field of view selection angle of pan/tilt/zoom, which is considered to be best, corresponding to the subject detection result (the mode of the subject within the screen frame), is obtained.

After the best composition judgment process such as that described above is performed, the control unit 27 performs composition adjustment control (S3). That is, the control unit 27 performs pan/tilt/zoom control such that the best composition is a target composition.
Specifically, as the composition adjustment control, the control unit 27 designates the information on each image-capturing field of view selection angle of pan/tilt, which was determined by the best composition judgment process, to the control unit 51 on the tripod head 10 side.
In response to this, the control unit 51 obtains the amount of movement with regard to the pan mechanism unit 53 and the tilt mechanism unit 56, which causes the digital still camera 1 to be directed in the image-capturing direction in which each designated image-capturing field of view selection angle of pan/tilt is obtained, and performs supply of a pan control signal for the motor 54 for pan and supply of a tilt control signal for the motor 57 for tilt so that pan driving and tilt driving of the obtained amount of movement are performed.
Furthermore, the control unit 27 designates the optical system unit 21 of the information (that is, information on the angle of view) on the image-capturing field of view selection angle that was determined by the best composition judgment process, causing a zoom operation by the optical system unit 21 to be performed so as to obtain the designated angle of view.

Then, in a case where the composition adjustment operation based on the composition adjustment control is completed and the composition that is considered to be best is obtained, the control unit 27 performs a release timing determination process (S4).
Here, in the present example, a release is not performed immediately in response to the obtaining of the best composition, and a release is performed under a final condition in which, for example, the subject becomes a predetermined state, such as a smile. The release timing determination process makes a determination as to whether such a final condition is satisfied.

In a case where the release timing determination process determines that the final condition (release condition) is satisfied, automatic recording of the captured image data is performed as a release process in step S5. Specifically, the control unit 27 performs control for the encoding/decoding unit 25 and the medium controller 26, and causes recording of the captured image data that has been obtained at that point in time to be performed in the memory card 40.

In the manner described above, in the image-capturing system of the present embodiment, an automatic image-capturing operation in accordance with automatic composition adjustment is realized on the basis of the control and processing by the control unit 27.

Meanwhile, although in Fig. 10, the illustration is omitted for simplification of description, there is a case in which composition adjustment in step S3 fails for the reason that, for example, a subject is not detected during composition adjustment. In that case, processing is performed again starting from the subject search in step S1.
Similarly, a case can occur in which release timing does not become OK in the release timing determination process in step S4. Also, in that case, processing is performed again starting from the subject search in step S1. Meanwhile, usually, the release timing determination process is a process for determining whether or not a release condition, such as a smile described above, is satisfied within a predetermined time period.

### <2. First Embodiment (subject search is performed in accordance with movement>

### [2-1. Specific operation example]

Here, in the image-capturing system (portable electronic apparatus) as the present embodiment described above, a configuration (in this case, the tripod head 10) for enabling pan/tilt driving can be formed sufficiently small to such a degree as to be portable. Therefore, the entire image-capturing system including the digital still camera 1 can also be formed sufficiently small to such a degree as to be portable.

It can be assumed that the arrangement position of the image-capturing system that is mobile as described above is moved by the user. Specifically, it is considered that regarding the image-capturing system that performs automatic image-capturing operation such as that described above, a use method of performing automatic image-capturing operation in accordance with so-called distant composition by making the arrangement position thereof far or of performing automatic image-capturing from a different image-capturing angle is adopted.

However, in a case where the image-capturing system is moved by the user, there is a probability that a change occurs in the mode (for example, the number of subjects and the subject size) of the subject displayed within the screen frame.
For example, a case is assumed in which the arrangement position of the image-capturing system is moved during the best composition judgment (S2) and the composition adjustment (S3) shown in Fig. 10 earlier. In that case, best composition judgment and composition adjustment corresponding to the mode of the subject before being moved are performed in spite of that the mode of the subject within the screen frame is changed.

As is understood from the above, in a case where the arrangement position of the image-capturing system is moved by the user, by assuming that the mode of the subject that is displayed within the screen frame has changed, some sort of corresponding operation is preferably performed.

However, in the image-capturing system of the related art disclosed in PTL 1 given earlier, it is not assumed (not permitted) that the arrangement position of the system is moved by the user during the automatic image-capturing operation. Consequently, when the arrangement position of the system is moved by the user, an appropriate corresponding operation cannot be performed.
That is, specifically speaking, whereas the user desires that automatic image capture in accordance with, for example, a different angle or the like be performed by moving the arrangement position of the image-capturing system during the automatic image-capturing operation, a problem arises in that an appropriate operation corresponding thereto cannot be performed.
In the manner described above, in the image-capturing system of the related art, an appropriate corresponding operation corresponding to a case in which the movement of the arrangement position has been performed by the user during the automatic image-capturing operation cannot be performed, eventually, a use method of freely moving the arrangement position during the automatic image-capturing operation, cannot be permitted. In the sense, it can be said that the image-capturing system lacks in intelligence and lacks in usefulness for the user.

Accordingly, in the first embodiment, after the detection of the stationary state/lift-up state (moving state) is made possible by providing the stationary/lift-up detection unit 59 described earlier, a subject search is performed on the basis of the determination result as to whether or not movement has occurred from the stationary state.

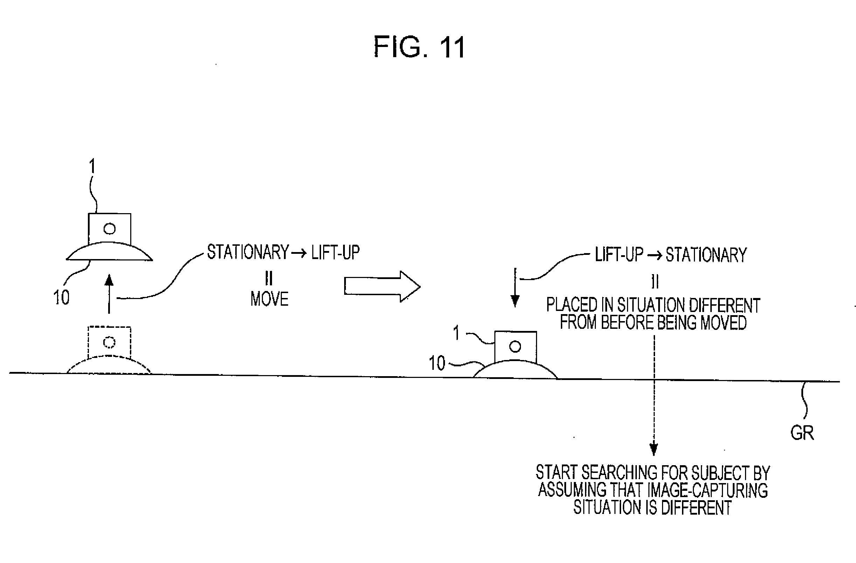

Fig. 11 is a schematic illustration of specific operations as the first embodiment.
First, as shown on the left side in the figure, in a case where an image-capturing system constituted by the digital still camera 1 and the tripod head 10 is lifted up from a stationary state (a case in which the detection signal of the stationary/lift-up detection unit 59 has changed from ON to OFF), it can be regarded that the movement of the image-capturing system has started.
Then, from after the movement from the stationary state is detected as described above, in a case where the image-capturing system returns to a stationary state again as shown on the right side in the figure (in a case where the detection signal of the stationary/lift-up detection unit 59 has changed from OFF to ON), the image-capturing system can be regarded as having been placed in a situation different from that before being moved.
Therefore, in accordance with the above, by assuming that the image-capturing situation has become different from that before being moved as shown in the figure, the search for a subject is started.

In the manner described above, in the first embodiment, in response to the movement from the stationary state being detected and thereafter returning to the stationary state again being detected, the subject search is performed. That is, even while the automatic image-capturing operation is being performed, in a case where the movement from the stationary state is detected and thereafter returning to the stationary state again is detected (that is, in a case where the image-capturing situation is regarded as being different), it is possible to perform starting from the subject search over again in response to the above.

According to such a first embodiment, it is possible to realize an image-capturing system capable of performing an appropriate corresponding operation in accordance with the movement of the arrangement position while the automatic image-capturing operation is being performed. In other words, it is possible to realize an image-capturing system that is more intelligent than existing systems and more useful for the user, for which a use method in which the user freely moves the image-capturing system while the automatic image-capturing operation is being performed is permitted.

### [2-2. Processing procedure]

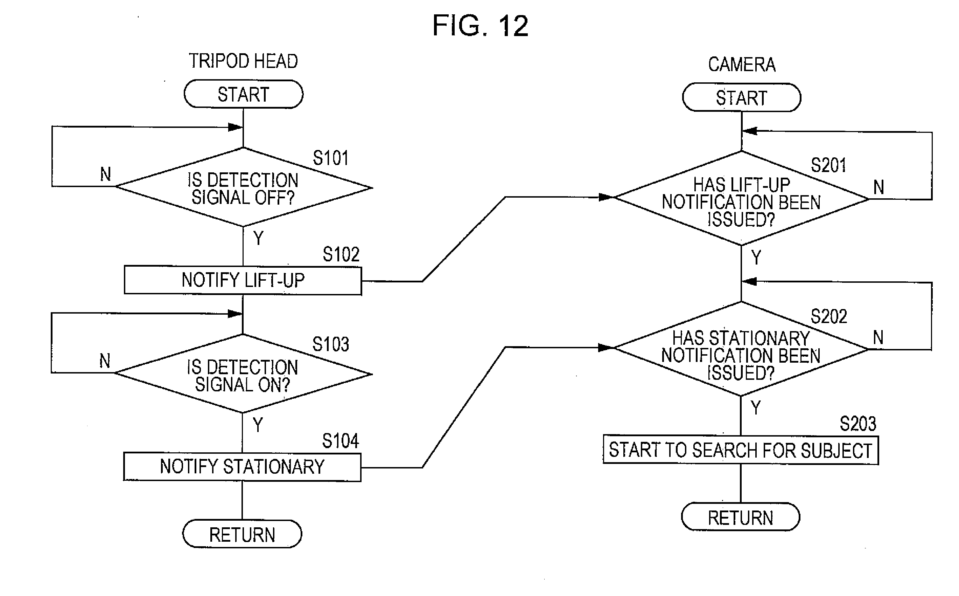

Fig. 12 is a flowchart illustrating a specific processing procedure for realizing operations as the first embodiment.
Meanwhile, in the flowchart of Fig. 12, the processing shown as "camera" shows processing that the control unit 27 shown in Fig. 6 performs in accordance with, for example, a program stored in the ROM 28. Furthermore, processing shown as "tripod head" shows processing that the control unit 51 shown in Fig. 7 performs in accordance with, for example, a program stored in the internal ROM or the like.

In Fig. 12, first, on the tripod head side, waiting is performed until the detection signal becomes OFF in the process of step S101 in the figure. That is, a determination process for determining whether or not the detection signal from the lift-up detection unit 59 shown in Fig. 7 (and Fig. 8) has changed to OFF is repeatedly performed until a determination result that the detection signal has changed to OFF is obtained.
In step S101, in a case where an affirmative result that the detection signal has changed to OFF is obtained, the process proceeds to step S102.

In step S102, a lift-up notification is issued to the camera side (the control unit 27 side).
Then, in the subsequent step S103, waiting is performed until the detection signal changes to ON. That is, a determination process for determining whether or not the detection signal from the lift-up detection unit 59 has changed to ON is repeatedly performed until a determination result that the detection signal has changed to ON is obtained.

In a case where an affirmative result that the detection signal has changed to ON is obtained in step S103 above, in step S104, a stationary notification is issued to the camera side.
On the tripod head side, after the process of step S104 is performed, the control goes to "RETURN" as shown in the figure.

On the camera side, in the process of step S201 in the figure, waiting is performed until a lift-up notification from the tripod head side in step S102 above is performed.
Then, in a case where an affirmative result that the lift-up notification has been issued is obtained in step S201, the process proceeds to step S202, where waiting is performed until a stationary notification from the tripod head side is issued in the process of step S104 earlier.

In a case where an affirmative result that the stationary notification has been issued is obtained in step S202 above, in step S203, a process for searching for a subject is performed. Specifically, pan instruction is issued to the control unit 51 so as to cause a pan operation by the pan mechanism unit 53 to be started and also, an instruction of causing the signal processing unit 24 to start a subject detection process is issued.
On the camera side, after the process of step S203 is performed, the control goes to "RETURN" as shown in the figure.

### <3. Second Embodiment (origin resetting of pan angle is performed in accordance with movement>

### [3-1. Specific operation example]

Next, a description will be given of a second embodiment.
In the second embodiment, origin resetting of a pan angle is performed on the basis of the determination result as to whether or not movement from the stationary state of the image-capturing system has occurred.
Meanwhile, in the second embodiment, the configuration of the image-capturing system is the same as that of the first embodiment, and thus, the repeated description thereof using illustrations is omitted.

Here, regarding an image-capturing system that performs an automatic image-capturing operation in accordance with automatic composition adjustment in which a pan mechanism is fully used, in the image-capturing system of the related art, which is described in PTL 1 or the like, a process for detecting the mechanical absolute position (absolute 0° position) of the pan rotational axis is performed on the basis of the relation that a rotary encoder compatible with a so-called incremental method is used as a rotary encoder 53a shown in Fig. 7. In other words, in the image-capturing system of the related art, in order that a certain reference position that is determined mechanically always becomes the 0° position (origin) of a pan angle, at the time of initialization, such as, for example, power ON time, after the mechanical absolute 0° position is first detected (that is, after the rotational angle of the pan rotational axis is adjusted to the absolute 0° position), a so-called initial process of resetting the count value of the output pulses of the rotary encoder 53a to 0 is performed.

Meanwhile, in the system that performs an automatic image-capturing operation in accordance with automatic composition adjustment, the absolute 0° position is set at a reference angle position at the time of, for example, a subject search. That is, at the time of the subject search, subject detection is performed while the pan angle is changed in the range of ±x° by using the absolute 0° position as a reference.

Here, in a case where a use method of freely moving the arrangement position of the image-capturing system that is being operated is assumed, when the user moves the image-capturing system and rearranges it at another position, it is proper that it is considered that the user intends to perform an automatic image-capturing operation by setting the direction in which the lens unit 21a of the digital still camera 1 is directed as a front (0°).

However, if it is assumed that a technique of the related art for determining a mechanical absolute 0° position in the manner described above is to be followed, the initial process is performed in correspondence with a case in which movement of the system occurs.
As a consequence of the above, the direction in which the lens unit 21a is directed is forcibly adjusted to the mechanical absolute 0° position. In other words, in a case where the technique of the related art is followed, the direction in which the lens unit 21a is directed does not necessarily coincide with the 0° direction as the front. As a result, the image-capturing system cannot intelligently predict the user's intention in that way, and lacks in usefulness for the user.

Furthermore, when the user moves the image-capturing system and rearranges it, it is considered that the user intends to immediately perform an automatic image-capturing operation in which the direction in which the lens unit 21a is directed is set as a front. However, if the initial process (in particular, a mechanical detection process of the absolute 0° position) is performed in accordance with the movement of the image-capturing system in the manner described above, the direction that has been intended in the manner described above cannot be set as a front, and moreover, a useless pan driving process needs to be performed. Thus, this causes the user to wait until the automatic image-capturing operation is restarted by an amount corresponding thereto.

Therefore, in the second embodiment, an origin resetting process of a pan angle is performed on the basis of the determination result as to whether or not movement from the stationary state of the image-capturing system has occurred.

Here, the origin resetting process of the pan angle means a process for zero-resetting the count value of pulses that are output by the rotary encoder 53a.

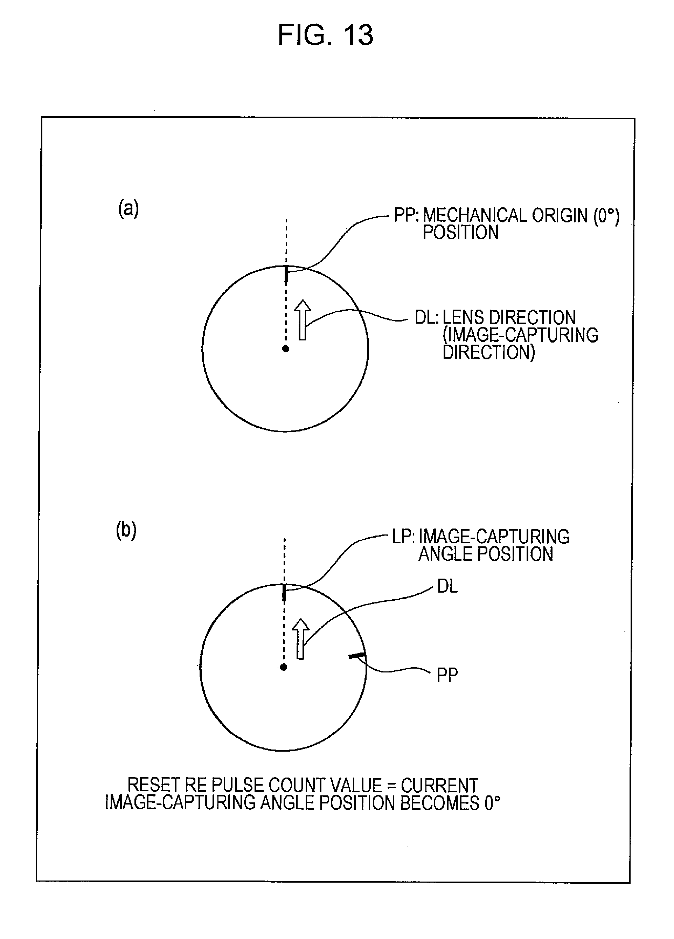

Fig. 13 illustrates that the origin (0°) of a pan angle is reset in accordance with such a zero-resetting process of a pulse count value of the rotary encoder 53a.
First, part (a) of Fig. 13 illustrates a state in which a lens direction (image-capturing direction) DL, which is a direction in which the lens unit 21a included in the digital still camera 1 is directed, coincides with a mechanical origin position (a mechanical absolute 0° position) PP.
Furthermore, part (b) of Fig. 13 illustrates a state in which an image-capturing angle position LP, which is an angle position that coincides with a lens direction DL, does not coincide with the mechanical origin position PP. When the automatic image-capturing operation in which automatic composition adjustment described earlier has started and later, there is a high probability that a state shown in part (b) of Fig. 13 is reached.

Here, in an incremental method, a pulse count value that is obtained by counting the number of output pulses of the rotary encoder 53a represents (the absolute value) of the amount of rotational angle. That is, as is understood from the above, if the pulse count value is zero-reset, it is possible to perform origin resetting in the pan direction. Specifically speaking, if such zero-resetting of the pulse count value is performed, it is possible to set the direction in which the lens unit 21a is directed at the origin (0° position) of the pan angle when the zero-resetting is performed.

In the second embodiment, on the basis of the determination result as to whether or not movement from the stationary state of the image-capturing system has occurred, a zero-resetting process of the pulse count value of the rotary encoder 53a such as that described above is performed so as to reset the origin of the pan angle.

Specifically, in the second embodiment, the following operation is performed on the basis of the detection signal obtained by the stationary/lift-up detection unit 59.
That is, in response to that the detection signal by the stationary/lift-up detection unit 59 has changed to OFF and movement of the image-capturing system from the stationary state has occurred, first, a process for stopping pan driving is performed.
By performing a pan driving stop process as described above, in correspondence with a case in which pan driving was being performed immediately before movement from the stationary state occurred, it is possible to cause the pan driving not to be continued in the middle of being moved.

Meanwhile, for a state immediately before movement occurs, a case in which tilt driving is being performed can be assumed. Therefore, in response to that a movement from the stationary state has occurred, in practice, a process for stopping tilt driving is also performed.
At any rate, a state in which the driving of the movable mechanism, such as pan/tilt, is continued in the middle during which the image-capturing system is lifted up and moved is not preferable. Therefore, in response to that movement from the stationary state has occurred, an instruction of stopping the driving of the movable mechanism is issued.

Furthermore, along with the above, in response to that movement from the stationary state has occurred in the manner described above, a determination is also made as to whether or not the detection signal by the stationary/lift-up detection unit 59 has changed to ON (that is, whether or not the image-capturing system has been returned to the stationary state again from the moving state).
Then, in response to a determination result that the detection signal by the stationary/lift-up detection unit 59 has changed to ON being obtained on the basis of the determination, a process for zero-resetting the pulse count value is performed as a process for resetting the origin of the pan angle.

As a result of performing the operations such as those described above, in response to that the arrangement position of the system has been moved, it is possible to set the direction in which the lens unit 21a is directed after being moved at the 0° position as the front.

Here, in the present example, in response to that movement from the stationary state of the image-capturing system has occurred in the manner described above, first, a pan driving stop process is performed. That is, as a result, it is devised that pan driving in the middle of being moved is not performed.

Based on this point, as a timing at which the pulse count value is zero-reset, it is noticed that the same result is obtained for a timing at which the image-capturing system is made to be stationary again from the moving state in the manner described above and for a timing at which movement from the stationary state occurs. That is, at any of these timings, it does not make difference in that the direction in which the lens unit 21a is directed after being moved can be made to become the front (0°).

As described above, as the operation of the second embodiment, in a case where a pan driving stop process is to be performed in response to that movement from the stationary state has occurred, it becomes possible to adopt both a technique for zero-resetting the pulse count value at a timing at which the image-capturing system is made to be stationary again and a technique for zero-resetting the pulse count value at a timing at which the movement has occurred.

In the manner described above, according to the second embodiment, it is possible to reset the origin of the pan angle in such a manner that the direction in which the lens unit 21a is directed becomes a front in correspondence with that the arrangement position of the image-capturing system is moved.
As a result, according to the second embodiment, it is possible to perform an appropriate corresponding operation appropriate for the intent when the user moves the arrangement position of the system. Furthermore, at the same time, it is possible to permit a use method of freely moving the working image-capturing system.
As a result, it is possible to realize an image-capturing system that is more intelligent than existing systems and more useful for the user.

### [3-2. Processing procedure]

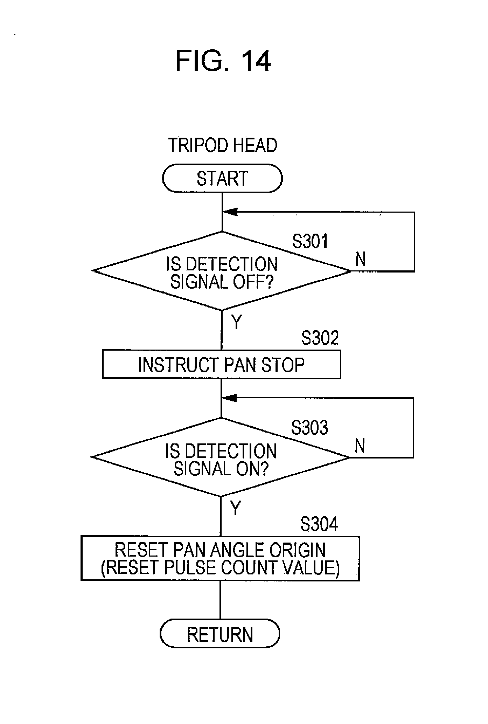

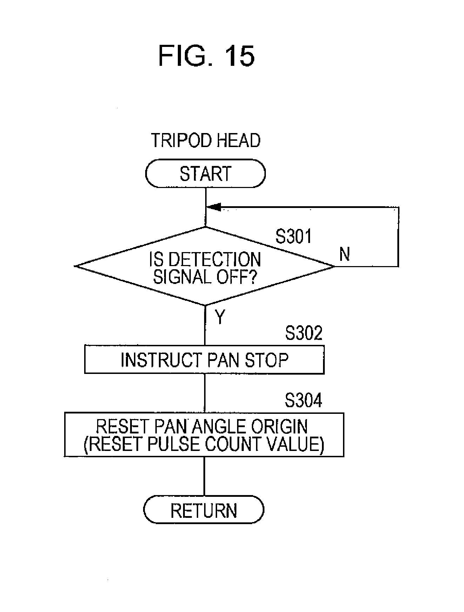

Flowcharts of Figs. 14 and 15 illustrate specific processing procedures for realizing operations as the second embodiment described in the foregoing.
Fig. 14 illustrates a processing procedure in a case where a pan angle origin resetting process is to be performed at a timing at which the image-capturing system is made to be stationary again. Furthermore, Fig. 15 illustrates a processing procedure in a case where a pan angle origin resetting process is to be performed at a timing at which movement from the stationary state of the image-capturing system has occurred.
Meanwhile, the processings shown in Figs. 14 and 15 are performed by the control unit 51 shown in Fig. 7 in accordance with programs that are stored in, for example, an internal ROM.

First, in Fig. 14, in step S301, waiting is performed until the detection signal from the stationary/lift-up detection unit 59 changes to OFF.
Then, when an affirmative result is obtained in step S301 by regarding that the detection signal has changed to OFF, a pan stop instruction is performed in step S302. That is, an instruction for causing the driving unit 55 for pan shown in Fig. 7 to forcedly stop the driving of the motor 54 for pan is issued.

In the subsequent step S303, waiting is performed until the detection signal from the stationary/lift-up detection unit 59 changes to ON.
Then, in a case where an affirmative result is obtained in step S303 by regarding that the detection signal has changed to ON, a pan angle origin resetting process is performed in step S304. That is, a process for zero-resetting the count value of the output pulses of the rotary encoder 53a is performed.
After the process of step S304 is performed, the control goes to "RETURN", as shown in the figure.

Furthermore, a processing procedure in a case where the pan angle origin resetting process is performed at a timing at which movement from the stationary state of the image-capturing system occurs, which is shown in Fig. 15, is such that the process of step S303 in the processing procedure shown in Fig. 14 is omitted.
Specifically, in this case, after a pan stop instruction is issued in step S302, a pan angle origin resetting process is performed in step S304.

### <4. Third Embodiment (control of subject search start range in accordance with vertical movement direction)>

### [4-1. System configuration and specific operation example]

Next, a third embodiment will be described.
The third embodiment is such that, in a case where a corresponding operation of starting a subject search is performed in response to the movement of the arrangement position of the image-capturing system as in the first embodiment, the start range of the subject search is controlled in accordance with the movement direction (vertical movement direction) in the vertical direction of the image-capturing system.

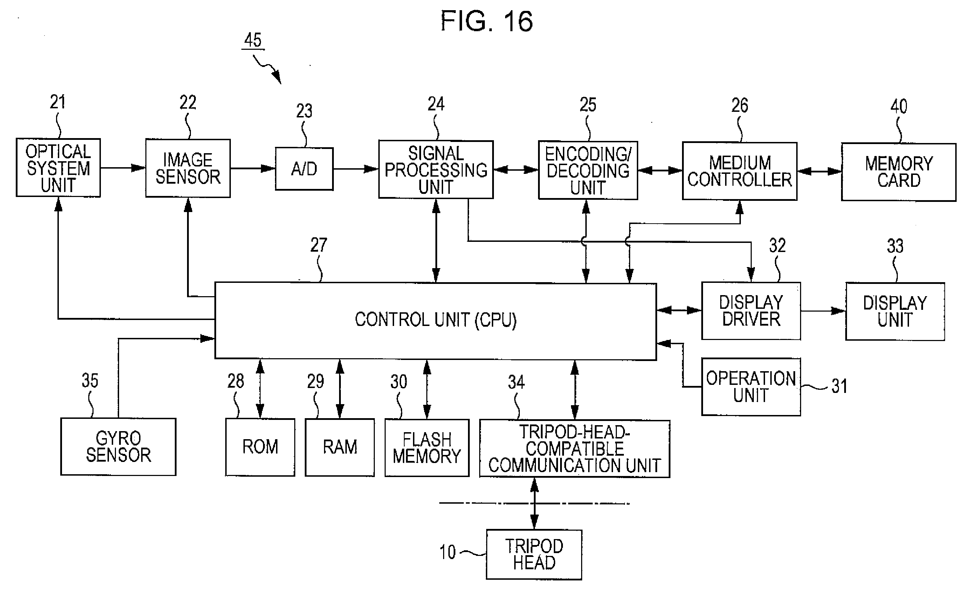

Fig. 16 is a block diagram illustrating the internal configuration of a digital still camera 45 included in the image-capturing system as the third embodiment.
As is seen from the comparison between Fig. 16 and Fig. 6 earlier, the digital still camera 45 of the third embodiment is formed such that a gyro sensor 35 is added to the digital still camera 1 of the first embodiment.
The gyro sensor 35 is formed as a gyro sensor of at least one axis, and is provided in the digital still camera 45 in such a manner that the arrangement direction thereof is adjusted so that an acceleration in the direction that coincides with the vertical direction (the longitudinal direction of the digital still camera 45) can be detected.
The detection signal obtained by the gyro sensor 35 is supplied to the control unit 27.

Meanwhile, also, in the third embodiment, the configuration of the tripod head 10 is the same as that of the first embodiment, and thus, the repeated description using illustrations is omitted.

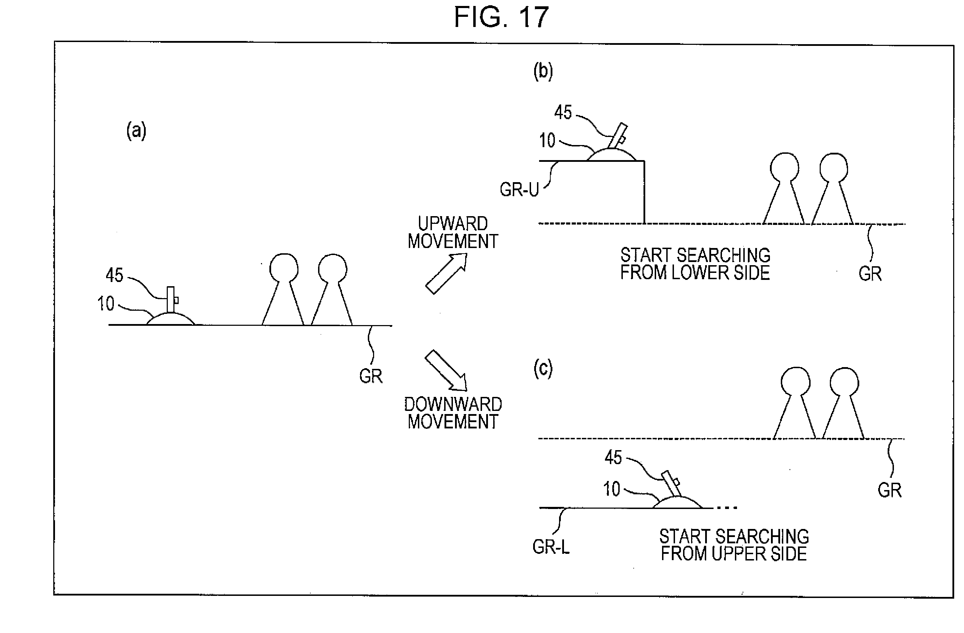

Fig. 17 is a schematic illustration of operations as the third embodiment.
Initially, part (a) of Fig. 17 illustrates a state in which an image-capturing system in which the digital still camera 45 is mounted in the tripod head 10 is made to be stationary with respect to a certain grounding surface GR.

It is assumed that the image-capturing system is lifted up from the stationary state shown in part (a) of Fig. 17, and that the image-capturing system is made to be stationary at a grounding surface GR-U which is higher than the grounding surface GR.
In response to that the arrangement position of the image-capturing system has been moved to a higher position as described above, a search from the downward side is started as shown in the figure.

On the other hand, in response to that the image-capturing system has been made to be stationary at a grounding surface GR-L as shown in part (c) of Fig. 17, which is lower than the grounding surface GR, from the stationary state shown in part (a) of Fig. 17, a search from the upward side is started as shown in the figure.

Here, as a subject search, there is a case in which, as a so-called 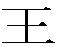 -character search, a search operation of detecting a subject while pan driving is being performed is performed while changing the tilt angle one after another.
Specifically, the 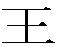 -character search is such that a search operation regarding a certain pan angle range (for example, ±90° with 0° being a starting point) is made to be one search operation, and the search operation is performed a plurality of times by setting a different tilt angle for each time. More specifically, a search operation in a first tilt angle setting state, a search operation in a second tilt angle setting state, and a search operation in a third tilt angle setting state are performed in sequence.
In a case where a subject search by such 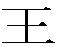 -character search is to be performed, in the related art, a tilt angle (a tilt angle that is set at the time of a search operation at a first time among the plurality of search operations) at which the search is started is fixed at a certain angle. In other words, a search operation from the downward side or the upward side is started at all times.

For example, in a case where the 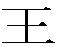 -character search of staring a search operation from the downward side at all times is to be adopted, in a case where movement toward the downward side has been performed as shown in part (c) of Fig. 17, a search operation from the downward side in which the probability that the subject is displayed is low is started.
In contrast, in a case where the 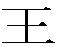 -character search in which a search operation starts from the upward side at all times, in a case where movement toward the upward side is performed as shown in part (b) of Fig. 17, a search operation from the upward side in which the probability that the subject is displayed is low is started.

Depending on a technique of the related art in which the tilt angle at which a search is started is fixed in this manner, there is a risk that the subject cannot be efficiently searched for in a case where the arrangement position of the image-capturing system is moved in the vertical direction. In that sense, the image-capturing system lacks in intelligence, and lacks usefulness for the user.

Accordingly, in the third embodiment, regarding the movement of the arrangement position in either the upward or downward vertical movement direction, in a case where the upward movement of the arrangement position has occurred, the tilt angle is assigned to the downward side and a search operation from the downward side is started as shown in part (b) of Fig. 17; in contrast, in a case where the downward movement of the arrangement position has occurred, the tilt angle is assigned to the upward side and a search operation from the upward side is started as shown in part (c) of Fig. 17.

According to such operations as the third embodiment, in a case where a technique of performing a subject search in accordance with the movement of the arrangement position is to be adopted as described as the first embodiment, an image-capturing system that is capable of efficiently searching for a subject even if the arrangement position of the image-capturing system is changed in the vertical direction and that is resultantly more intelligent than existing systems and useful for the user can be realized.

### [4-2. Processing procedure]

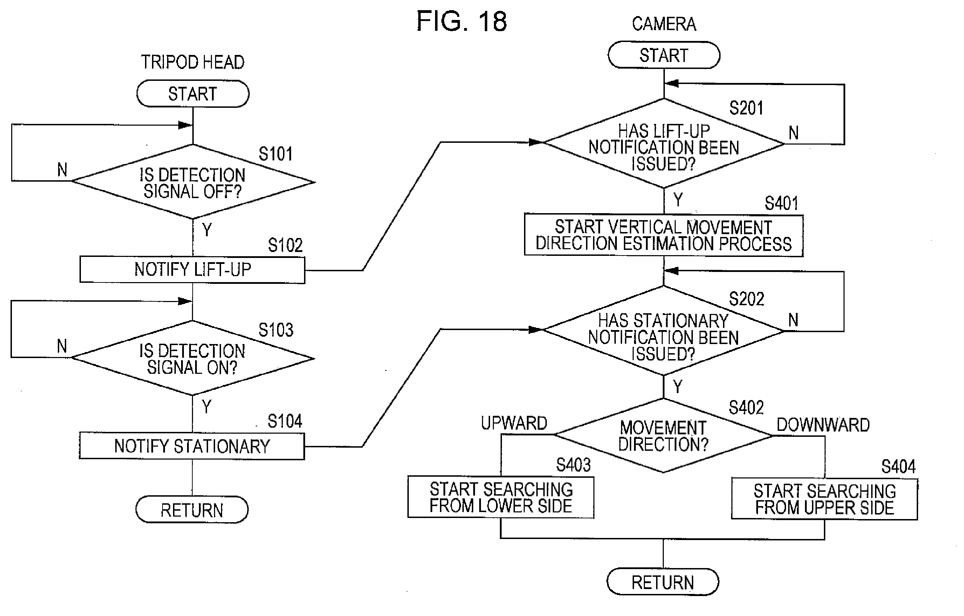

Fig. 18 illustrates a specific processing procedure for realizing operations as the third embodiment described in the foregoing.
Meanwhile, in the flowchart of Fig. 18, the processing shown as "camera" represents processing performed by the control unit 27 shown in Fig. 16 in accordance with a program stored in, for example, the ROM 28. Furthermore, the processing shown as "tripod head" represents processing performed by the control unit 51 shown in Fig. 7 in accordance with a program stored in, for example, an internal ROM.
Furthermore, in Fig. 18, the processes that are the same content as that described in the first embodiment are designated with the same reference numerals.

First, as is seen from the comparison between Fig. 18 and Fig. 12 earlier, the processing on the tripod head side is the same as in the case of the first embodiment.
This case differs from the first embodiment in that, as processing on the camera side, the process of step S401 is inserted between step S201 and S202, and the processing at and subsequent to step S402 is performed in place of step S203.

Specifically, as processing on the camera side in this case, in a case where an affirmative result that a lift-up notification has been issued from the tripod head side is obtained in step S201, a vertical movement direction estimation process is started in step S401.

Here, the estimation process for the vertical movement direction is performed in such a manner that, regarding, for example, the waveform pattern of the detection signal from the gyro sensor 35, a waveform pattern that is characteristic at the time of the upward movement and a waveform pattern that is characteristic at the time of the downward movement are determined on the basis of a result in which an experiment was performed in advance, and a match with them is performed.
In a case where such a technique is adopted, the process of step S401 specifically becomes a process for staring sampling of a detection signal from the gyro sensor 35.

Meanwhile, for specific processing content for estimating the vertical movement direction, other various processings are considered and should not be limited to the above-described technique.

Furthermore, in the processing on the camera side in this case, in a case where an affirmative result that a stationary notification has been issued from the tripod head side is performed in step S202, a process for making a determination as to the movement direction is performed in step S402.
Specifically, in a case where the vertical movement direction estimation process described above, which is shown as an example, is adopted, the determination process of step S402 becomes a process for making a determination as to which one of the waveform pattern that is characteristic at the time of the upward movement and the waveform pattern that is characteristic at the time of the downward movement the waveform pattern of the detection signal from the gyro sensor 35, in which sampling has started in step S401, is.

In a case where, in step S402, for example, the determination result that the waveform pattern of the detection signal from the gyro sensor 35 that started sampling in step S401 corresponds to the waveform pattern that is characteristic at the time of the upward movement is obtained, and the determination result that the movement direction is upward is obtained, the process proceeds to step S403, where a process for staring a search from the downward side is performed.
Specifically, in order that a search operation of performing subject detection while pan driving is being performed is performed in a state (state in which a tilt angle that is more downward than a predetermined tilt angle is set) in which the tilt angle is assigned to the downward side, tilt instruction/pan instruction with respect to the control unit 51 on the tripod head 10 side, and an instruction of causing the signal processing unit 24 to start a subject detection process are issued.

On the other hand, in a case where, in step S402, the determination result that the waveform pattern of the detection signal from the gyro sensor 35 that has started sampling in step S401 corresponds to the waveform pattern that is characteristic at the time of the downward movement and the determination result that the movement direction is downward is obtained, the process proceeds to step S404, where a process for staring a search from the upward side is performed.
That is, in order that the search operation is performed in a state (state in which a tilt angle that is more upward than the predetermined tilt angle is set) the tilt angle is assigned to the upward side, tilt instruction/pan instruction with respect to the control unit 51 on the tripod head 10 side, and an instruction of causing the signal processing unit 24 to start a subject detection process are issued.

After the process of step S403 or S404 is performed, the control goes to "RETURN".

### <5. Fourth Embodiment (zoom angle control in accordance with amount of movement>

### [5-1. Specific operation example]

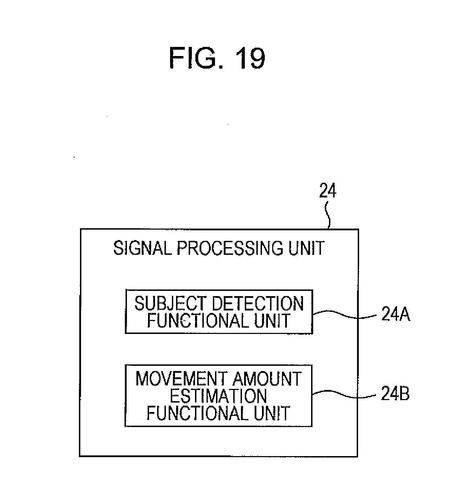

In a fourth embodiment, zoom angle control corresponding to an amount of movement is performed.
Here, in the fourth embodiment, the configuration of the image-capturing system is the same as that of the first embodiment. However, in the case of the fourth embodiment, the signal processing unit 24 in the digital still camera 1 includes the subject detection function unit 24A and also a movement amount estimation functional unit 24B, as shown in Fig. 19.
That is, as a function operation represented as the movement amount estimation functional unit 24B, the signal processing unit 24 in this case estimates, when movement from the stationary state of the image-capturing system occurs, the amount of the movement on the basis of image analysis.

Here, when the image-capturing system is lifted up and moved, an overall movement occurs in the captured image. Therefore, the estimation of the amount of movement can be performed by detecting such a movement that has occurred in the captured image.
Specifically, in this example, the speed of the movement that has occurred in the captured image and the time length during which the movement has occurred are detected, and the amount of movement is estimated on the basis of these items of information.

The technique for estimating the amount of movement of the image-capturing system on the basis of image analysis should not be limited to the above-described technique and, of course, another technique can be adopted.

In the fourth embodiment, the detection (estimation) of the amount of movement when the image-capturing system is moved as described above is made possible, and furthermore, zoom angle control corresponding to the detection amount of movement is performed in response to the image-capturing system returning to the stationary state from the moving state.
Specifically, the zoom angle control in this case is performed in such a manner that the smaller the amount of movement that has been detected, the more the zoom angle tends to increase (the focal length is short), and conversely, the larger the amount of movement that has been detected, the more the zoom angle tends to decrease (the focal length is long).
Meanwhile, control characteristics of the amount of movement - the zoom angle may be either linear or nonlinear.

Here, in the image-capturing system of the related art, since a use method of freely moving the arrangement position of the image-capturing system is not assumed, even if the arrangement position is moved, special zoom angle control is not performed.
However, according to the above, there is no special change in the zoom angle for the cases in which the amount of movement is small and the amount of movement is large, with the result that when the image-capturing situation changes, an appropriate operation corresponding to the change cannot be performed. That is, in this sense, the image-capturing system of the related art lacks in intelligence and lacks in usefulness for the user.

According to the above-described fourth embodiment, when the arrangement position of the image-capturing system is moved, a zoom angle corresponding to the amount of the movement can be set. That is, when the image-capturing situation changes, it is possible to perform an appropriate corresponding operation corresponding to the change. At this point, it is possible to realize an image-capturing system that is more intelligent than existing systems and more useful for the user.

### [5-2. Processing procedure]

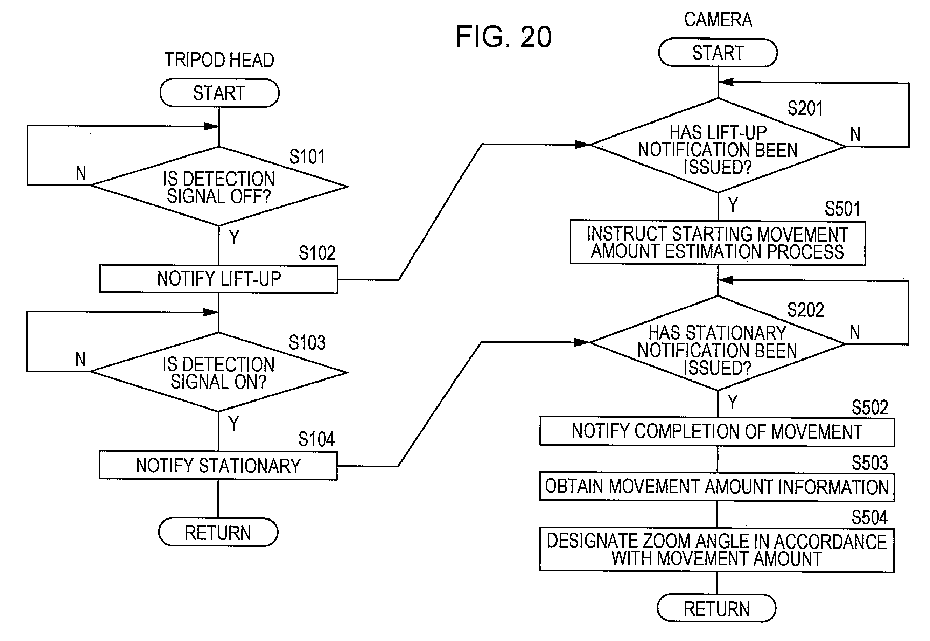

The flowchart of Fig. 20 illustrates a specific processing procedure for realizing operations as the fourth embodiment described above.
Meanwhile, also in this case, the processing shown as "camera" represents processing that is performed by the control unit 27 shown in Fig. 6 in accordance with, for example, a program stored in the ROM 28. Furthermore, the processing shown as "tripod head" represents processing performed by the control unit 51 shown in Fig. 7 in accordance with, for example, a program stored in an internal ROM.
Furthermore, also, in Fig. 20, the processings that are the same content as that described in the first embodiment are designated with the same reference numerals.

As is seen from the comparison between Fig. 20 and Fig. 12 earlier, also in this case, the processings on the tripod head side are the same as in the case of the first embodiment.
This case differs from the case of the first embodiment in that, as processing on the camera side, the process of step S501 is inserted between step S201 and S202, and processing at and subsequent to step S502 is performed in place of step S203.

As processing on the camera side in this case, in a case where an affirmative result that a lift-up notification has been issued from the tripod head side is obtained in step S201, an instruction of starting a movement amount estimation process is issued in step S501. That is, an instruction of causing the signal processing unit 24 to start the movement amount estimation process described earlier is issued.

Furthermore, on the camera side in this case, in a case where an affirmative result that a stationary notification has been issued from the tripod head side is obtained in step S202, a movement completion notification is issued to the signal processing unit 24 in step S502.
It is possible for the signal processing unit 24 to detect the time length during which the movement of the captured image has occurred in response to the movement completion notification, and to estimate the amount of movement based on the information on the time length and the information on the speed of the movement.

In the subsequent step S503, a process for obtaining movement amount information is performed. That is, the information on the amount of movement estimated (detected) by the signal processing unit 24 is obtained in response to the movement completion notification in step S502.

Then, in the next step S504, a zoom angle designation process corresponding to the amount of movement is performed. That is, the zoom angle corresponding to the information on the amount of movement obtained in step S503 is designated to the optical system unit 21 shown in Fig. 6.
After the process of step S504 is performed, the control goes to "RETURN".

Here, in the fourth embodiment, the movement of the image-capturing system is assumed to be performed in a direction that moves away from the subject. Thus, a case is shown as an example in which zoom angle control corresponding to the amount of movement is performed so that the smaller the amount of movement, the more the zoom angle tends to increase, and the larger the amount of movement, the more the zoom angle tends to decrease. In contrast, in a case where the image-capturing system is moved in a direction approaching the subject, the characteristics of zoom angle control corresponding to the amount of movement become characteristics reverse to the above. Specifically, it is sufficient that the smaller the amount of movement, the more the zoom angle tends to decrease, and the larger the amount of movement, the more the zoom angle tends to increase.

Meanwhile, at this time, a determination as to whether the movement of the image-capturing system has been performed in a direction that moves away from the subject or conversely in a direction that approaches the subject can be made by using, for example, a gyro sensor or a direction sensor. At this time, the direction of the subject can be estimated on the basis of the information on the pan angle before being moved. Consequently, it is possible to make a determination as to the movement direction (the direction that moves away/the direction that approaches) by using the subject as a reference on the basis of the information on the pan angle before being moved and the information on the movement direction that has been detected by the gyro sensor, a direction sensor, and the like.
The zoom angle control characteristics are switched in accordance with the determination result regarding such a distinction of the movement direction in which the subject is used as a reference. As a result, it is possible to perform appropriate zoom angle control in such a manner as to correspond to both a case where the movement of the image-capturing system is performed in the direction that moves away from the subject and a case where the movement is performed in the approaching direction.

### <6. Fifth Embodiment (image-capturing mode setting control in accordance with movement destination situation>

### [6-1. Specific operation example]

In a fifth embodiment, setting control of an image-capturing mode is performed in accordance with the image-capturing situation of a movement destination.
Meanwhile, the configuration of the image-capturing system of the fifth embodiment is the same as in the case of the first embodiment. Thus, the repeated description using illustrations is omitted.

Specifically, in the fifth embodiment, the number of subjects within the screen frame is detected in response to that the image-capturing system has been returned again from the moving state to the stationary state. In a case where the number is a certain number or more, a group photograph mode is set.
Here, the group photograph mode is an image-capturing mode suitable for a case in which many subjects are displayed within the screen frame. Specifically, in the case of this example, a setting which is in an aperture priority mode and in which the aperture value is set large is performed so that a focus is made on many subjects within at least the screen frame.

According to such a fifth embodiment, it is possible to realize an image-capturing system that is more intelligent than existing systems and useful for the user, such that when the arrangement position of the image-capturing system is moved, an appropriate image-capturing mode suitable for the image-capturing situation of the movement destination can be set.

### [6-2. Processing procedure]

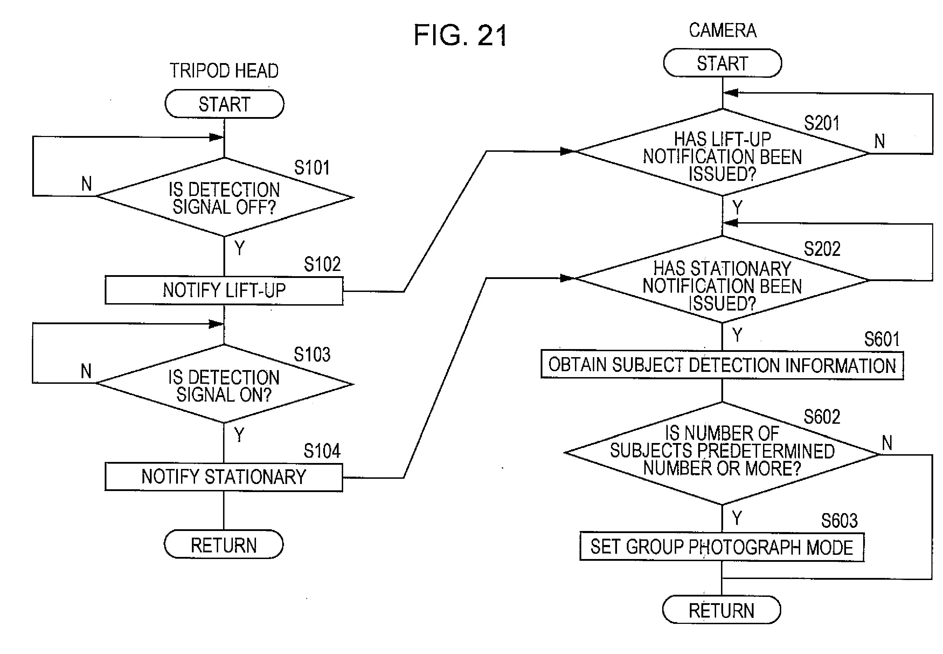

The flowchart of Fig. 21 illustrates a specific processing procedure for realizing operations as the fifth embodiment described above.
Meanwhile, also in this case, the processings shown as "camera" represent processings performed by the control unit 27 shown in Fig. 6 in accordance with, for example, a program stored in the ROM 28. Furthermore, the processings shown as "tripod head" represent processings performed by the control unit 51 shown in Fig. 7 in accordance with, for example, a program stored in an internal ROM. Furthermore, also in Fig. 21, the processings that are the same as the content as that described in the first embodiment are designated with the same reference numerals.

As is seen from the comparison between Fig. 21 and Fig. 12 earlier, also in this case, the processings on the tripod head side are the same as in the case of the first embodiment.
The processings on the camera side in this case differ from the first embodiment in that processes at and subsequent to step S601 are performed in a case where an affirmative result that a stationary notification has been issued from the tripod head side is obtained in step S202.

Specifically, in this case, in response to an affirmative result that a stationary notification has been issued from the tripod head side in step S202 being obtained, a process for obtaining subject detection information is performed in step S601. That is, subject detection information from the signal processing unit 24 is obtained.

Then, in the subsequent step S602, it is determined on the basis of the subject detection information whether or not the number of subjects is a predetermined number or more.
In a case where a negative result that the number of subjects is not a predetermined number or more is obtained in step S602, the control goes to "RETURN".

On the other hand, in a case where an affirmative result that the number of subjects is a predetermined number or more is obtained in step S602, the process proceeds to step S603, where a process for setting a group photograph mode is performed. That is, in the case of this example, a setting which is at least in an aperture priority mode and in which an aperture value is set large is performed.
After the process of step S603 is performed, the control goes to "RETURN", as shown in the figure.

### <7. Modification>

Although the embodiments of the present invention have been described hereinbefore, the present invention should not be limited to the specific examples as have been described above.
For example, corresponding operations in response to that movement from a stationary state has occurred should not be limited to those shown as examples in each embodiment and, for example, the following modifications are possible.
That is, in the modification, in response to a determination result that after movement from the stationary state has occurred, returning to the stationary state has occurred being obtained, the brightness (for example, the average luminance of the captured image) of the captured image is detected, and it is determined whether or not the detected brightness is lower than or equal to a prespecified predetermined brightness (the detected average luminance value is lower than or equal to a certain value). Then, as a result, in response to that the detected brightness is lower than or equal to the predetermined brightness, the power supply of the image-capturing system is switched off.

The modification is such that in a case where the image-capturing system is put away in a bag or the like, it is intended that, in response to that, the power supply can be automatically switched off.
In accordance with such a modification, in response to that the image-capturing system moves from a stationary state and is placed in a new situation, it is possible to perform an appropriate corresponding operation suitable for the new situation. In that sense, it is possible to realize an image-capturing system that is more intelligent than existing systems and useful for the user.

Here, as is understood from the description up to this point, in a case where the image-capturing system is placed in at least a stationary state to a moving state, it can be regarded that the arrangement position of the system will be moved by the user and is placed in a new situation.
It is sufficient for the present invention that a corresponding predetermined operation is performed on the basis of the result in which a determination is made as to whether or not movement from the stationary state has occurred as described above. As a result of the above, it is possible to realize an image-capturing system that is more intelligent than existing systems and useful for the user.

Furthermore, in the description up to this point, the stationary/lift-up detection of the image-capturing system is performed by a detection mechanism using a mechanical switch that is turned on/off in response to the stationary/lift-up of the system. Alternatively, stationary/lift-up detection can also be performed without using such a mechanical switch.
For example, the stationary/lift-up detection can also be performed by determining whether or not the captured image has flowed in the upward direction in an overall manner on the basis of image analysis.
Alternatively, it is also possible that a gyro sensor that detects at least acceleration in a longitudinal direction is used, and detection is performed by making a match between the waveform pattern of the detection signal of the gyro sensor and a unique waveform pattern at the time of lift-up.
Meanwhile, as is also understood from this point, it is sufficient for the stationary /movement detection means in the present invention to be at least configured that the output signal thereof changes in accordance with movement from the stationary state.

Furthermore, when stationary/lift-up detection that does not depend on a mechanical switch, such as image analysis or a technique using a gyro sensor, is to be performed, preferably, a detection technique in which a plurality of techniques are combined is used for the purpose of improving detection accuracy. Specifically, detection accuracy can be improved by, for example, obtaining a final detection result of stationary or lift-up only in a case where the detection results in a plurality of techniques match each other.

Furthermore, in the third embodiment, the estimation (detection) of the vertical movement direction is performed by using a gyro sensor. Alternatively, the estimation can also be performed by using image analysis. As an example, the estimation can be performed on the basis of, for example, the determination result in which the captured image has flowed in the upward direction or in the downward direction in an overall manner.
Alternatively, for example, when the same object has been displayed within the screen frame before/after being moved, it is also possible to estimate the vertical movement direction on the basis of the positional relationship within the screen frame before/after being moved.
Furthermore, regarding such a detection of the vertical movement direction, it is possible to improve detection accuracy not by using only one detection technique, but rather by using a combination of a plurality of detection techniques.

Furthermore, in the fourth embodiment, the detection of the amount of movement is performed by using image analysis. Alternatively, the detection of the amount of movement can also be performed by using a gyro sensor. As an example, for example, a technique, such as the amount of movement being estimated on the basis of an average acceleration between stationary to re-stationary, can be given.
Regarding such a detection of the amount of movement, it is possible to improve detection accuracy not by using only one detection technique, but rather by using a combination of a plurality of detection techniques. Specifically, in this case, for example, it is possible to improve detection accuracy by obtaining a mean value of the amount of movements that are detected by the plurality of techniques as a final amount of movement.

Furthermore, in the description up to this point, the control unit 51 on the tripod head side issues a lift-up notification/stationary notification to the control unit 27 on the camera side on the basis of the detection signal from the stationary/lift-up detection unit 59, and the control unit 27 performs corresponding control and processing in accordance with these notifications. It is also possible that a detection signal from the stationary/lift-up detection unit 59 is input to the control unit 27, and the control unit 27 performs control and processing corresponding to lift-up/stationary on the basis of the detection signal.

Furthermore, in the description up to this point, a case in which operation input with respect to the digital still camera 1 is performed by using a touch panel is shown as an example. It is also possible to adopt another user interface other than a user interface using a touch panel, such as a user interface in which, for example, icons and a cursor that moves in accordance with a direction designation operation are displayed on a screen, and a user is made to perform various operation inputs by performing a designation operation of the icon by using the cursor.

Furthermore, in the description up to this point, at least some of the processings on the camera side shown in the flowcharts can also be performed on the tripod head side. However, by providing control functions for a main subject search, composition judgment, and automatic image-capturing recording on the digital still camera 1 side, it becomes possible to combine a variety of types of digital still cameras 1 and the tripod head 10, thereby obtaining advantages in terms of versatility.

In the description up to this point, a case in which the portable electronic apparatus of the present invention is configured in such a manner that the image-capturing device and the tripod head device are removable (that is, can be formed as separate devices) is shown as an example. However, of course, the image-capturing device and the tripod head device can also be configured integrally in such a manner as to be incapable of being removed.

Furthermore, at least some of the configuration based on the present invention can be realized by causing a CPU or a DSP to execute a program.
In addition to being written and stored into, for example, a ROM at manufacturing time, it is considered that after such a program is stored on a removable storage medium, the program is installed (also including update) from the storage medium and is stored in a DSP-compatible non-volatile storage area or in the flash memory 30.
Furthermore, it is also considered that a program can be installed through a data interface, such as USB (Universal Serial Bus) or IEEE 1394, under the control of a device serving as a host. In addition, the program can also be configured in such a manner that after the program is stored in a storage device in a server on a network, by setting the digital still camera 1 to have a network function, the program can be downloaded and obtained from the server. Reference Signs List

1, 45 digital still camera, 2 main unit, 21a lens unit, 31a release button, 10 tripod head, 11 main unit, 12 camera seat part, 13 projecting part, 14 connector, 21 optical system, 22 image sensor, 23 A/D converter, 24 signal processing unit, 25 encoding/decoding unit, 26 medium controller, 27 control unit, 28 ROM, 29 RAM, 30 flash memory, 31 operation unit, 32 display driver, 33 display unit, 34 tripod-head-compatible communication unit, 35 gyro sensor, 40 memory card, 51 control unit, 52 communication unit, 53 pan mechanism unit, 54 motor for pan, 55 driving unit for pan, 56 tilt mechanism unit, 57 motor for tilt, 58 driving unit for tilt, 59 stationary/lift-up detection unit

## Claims

1. An electronic apparatus that is mobile, comprising:
a control unit that determines whether or not the apparatus has moved from a stationary state on the basis of a signal input from a stationary/movement detection unit that outputs a signal in accordance with movement from the stationary state, and that performs predetermined control on the basis of a result of the determination.

2. The electronic apparatus according to Claim 1, wherein the control unit
causes a subject detection unit that detects a subject to perform subject detection on the basis of a captured image obtained by an image-capturing unit while a field of view of the image-capturing unit that performs image capture is being changed in response to a determination result of whether or not movement from the stationary state has occurred so as to perform a search for a subject.

3. The electronic apparatus according to Claim 2, wherein the control unit
determines whether or not the apparatus has been returned to a stationary state on the basis of the input signal from the stationary/movement detection unit in response to a determination result that movement from the stationary state has occurred being obtained, and causes the subject search to be performed in response to a determination result that the apparatus has been returned to the stationary state is obtained being obtained on the basis of the determination.

4. The electronic apparatus according to Claim 1, wherein the control unit
is configured to perform control on a pan driving unit that rotationally drives a movable side part among a fixed side part that is grounded when the apparatus is in a stationary state, and the movable side part that is mounted in the fixed side part in such a manner as to be rotatable in a plane parallel to a grounding surface so as to change a pan angle of the movable side part, and
performs origin resetting of the pan angle on the basis of the determination result of whether or not movement from the stationary state has occurred.

5. The electronic apparatus according to Claim 4, wherein the control unit
issues a pan stop instruction to the pan driving unit in response to a determination result that movement from the stationary state has occurred being obtained.

6. The electronic apparatus according to Claim 4, wherein the control unit
issues a pan stop instruction to the pan driving unit in response to a determination result that movement from the stationary state has occurred being obtained, determines whether or not the apparatus has been returned to a stationary state on the basis of the input signal from the stationary/movement detection unit, and performs origin resetting of the pan angle in response to a determination result that the apparatus has been returned to a stationary state being obtained on the basis of the determination.

7. The electronic apparatus according to Claim 4, wherein the control unit
issues a pan stop instruction to the pan driving unit and thereafter performs origin resetting of the pan angle in response to a determination result that movement from the stationary state has occurred being obtained.

8. The electronic apparatus according to Claim 1, wherein the control unit
is configured to perform control on a tilt driving unit that drives a tilt driving object part that is configured to be freely inclinable by using an axis perpendicular to the grounding surface of the apparatus as a reference,
determines whether or not the apparatus has been returned to a stationary state on the basis of the input signal from the stationary/movement detection unit in response to a determination result that movement from the stationary state has occurred being obtained, and
controls the tilt driving unit so that setting of a tilt angle is performed on the basis of a detection result by a vertical movement direction detection unit that detects a movement direction in a vertical direction of the apparatus in response to a determination result that the apparatus has been returned to a stationary state being obtained on the basis of the determination.

9. The electronic apparatus according to Claim 8, further comprising:
an image-capturing unit that performs image capture so as to obtain a captured image; and
a subject detection unit that detects a subject from the image captured by the image-capturing unit,
wherein the control unit
performs a subject search control process for causing the subject detection unit to perform subject detection while a field of view of the image-capturing unit is changed so as to search for a subject in response to a determination result that the apparatus has been returned to a stationary state being obtained,
determines whether or not a movement direction of the apparatus is in an upward direction or in a downward direction on the basis of a detection result by the vertical movement direction detection unit,
performs a control process for staring the subject search in a state in which a tilt angle that is more downward than a predetermined tilt angle is set as the subject search control process in a case where a determination result that the movement direction of the apparatus is in an upward direction is obtained, and
performs a control process for staring the subject search in a state in which a tilt angle that is more upward than the predetermined tilt angle is set as the subject search control process in a case where a determination result that the movement direction of the apparatus is in a downward direction is obtained.

10. The electronic apparatus according to Claim 8, wherein the vertical movement direction detection unit
detects a movement direction in a vertical direction of the apparatus by using at least one of a captured image that is obtained by the image-capturing unit that performs image capture so as to obtain a captured image and a detection signal obtained by a gyro sensor.

11. The electronic apparatus according to Claim 1, further comprising:
an image-capturing unit that performs image capture so as to obtain a captured image;
a zoom mechanism unit that changes a field of view angle of the image-capturing unit; and
a movement amount detection unit that detects the amount of movement of the apparatus,
wherein the control unit
determines whether or not the apparatus has been returned to a stationary state on the basis of the input signal from the stationary/movement detection unit in response to a determination result that movement from the stationary state has occurred being obtained, and
controls, in response to a determination result that the apparatus has been returned to a stationary state being obtained on the basis of the determination, the zoom mechanism unit so that setting of a zoom angle based on the amount of movement that is detected by the movement amount detection unit is performed.

12. The electronic apparatus according to Claim 11, wherein the movement amount detection unit
detects the amount of movement of the apparatus by using at least one of a captured image obtained by the image-capturing unit and a detection signal obtained by a gyro sensor.

13. The electronic apparatus according to Claim 1, further comprising:
an image-capturing unit that performs image capture so as to obtain a captured image; and
a subject detection unit that detects a subject as a person from the image captured by the image-capturing unit,
wherein the control unit
determines whether or not the apparatus has been returned to a stationary state on the basis of the stationary/movement detection signal in response to a determination result that movement from the stationary state has occurred being obtained, and
performs control so that, in response to a determination result that the apparatus has been returned to a stationary state being obtained on the basis of the determination, an image-capturing parameter corresponding to the number of subjects, which is identified on the basis of a subject detection result by the subject detection unit, is set in the image-capturing unit.

14. The electronic apparatus according to Claim 1, further comprising an image-capturing unit that performs image capture so as to obtain a captured image,
wherein the control unit
determines whether or not the apparatus has been returned to a stationary state on the basis of the input signal from the stationary/movement detection unit in response to a determination result that movement from the stationary state has occurred being obtained, and
determines whether or not a brightness of the captured image by the image-capturing unit is lower than or equal to a predetermined brightness in response to a determination result that the apparatus has been returned to a stationary state being obtained on the basis of the determination, and
performs control so that a power supply of the apparatus is switched off in response to a determination result that the brightness of the captured image is lower than or equal to the predetermined brightness being obtained on the basis of the determination.

15. The electronic apparatus according to Claim 1, wherein the stationary/movement detection unit
is configured to include any of a mechanical switch that is configured to be turned on/off in accordance with a distinction between a state in which the apparatus has been lifted up and a state in which the apparatus is in a stationary state, an image-capturing unit that performs image capture so as to obtain a captured image, and a gyro sensor.

16. The electronic apparatus according to Claim 1, wherein the stationary/movement detection unit
is configured to include an image-capturing unit that performs image capture so as to obtain a captured image, and a gyro sensor.

17. A method of controlling an electronic apparatus that performs predetermined processing, the method comprising:
a movement determination step of determining whether or not the apparatus that is mobile has moved from a stationary state on the basis of a signal input from a stationary/movement detection unit that outputs a signal in accordance with movement from the stationary state; and
a control step of performing predetermined control on the basis of a determination result in the movement determination step.

18. A program for causing a computer to perform processing comprising:
a movement determination process of determining whether or not the apparatus has moved from a stationary state on the basis of a signal input from a stationary/movement detection unit that outputs a signal in accordance with movement from the stationary state; and
a control process of performing predetermined control on the basis of a determination result in the movement determination process.

19. An image-capturing system that includes an image-capturing device including an image-capturing unit that performs image capture so as to obtain a captured image, and a tripod head device that changes a field of view of the image-capturing unit by driving a movable mechanism, the image-capturing system comprising:
a stationary/movement detection unit that outputs a signal in accordance with movement of the tripod head device from a stationary state; and
a control unit that determines whether or not the tripod head device has moved from the stationary state on the basis of an input signal from the stationary/movement detection unit and that performs predetermined control on the basis of a result of the determination.
